(19) Europäisches Patentamt
European Patent Office
Office européen des brevets

(11) **EP 4 622 247 A1**

(12) **EUROPEAN PATENT APPLICATION**
published in accordance with Art. 153(4) EPC

(43) Date of publication:
**24.09.2025 Bulletin 2025/39**

(21) Application number: **22966138.4**

(22) Date of filing: **23.11.2022**

(51) International Patent Classification (IPC):
*H04N 7/015* *(2006.01)*

(52) Cooperative Patent Classification (CPC):
**H04N 7/015**

(86) International application number:
**PCT/CN2022/133821**

(87) International publication number:
**WO 2024/108443 (30.05.2024 Gazette 2024/22)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Huawei Technologies Co., Ltd.
Shenzhen, Guangdong 518129 (CN)**

(72) Inventors:
• **DONG, Lei
Shenzhen, Guangdong 518129 (CN)**
• **TANG, Hao
Shenzhen, Guangdong 518129 (CN)**
• **ZHANG, Liqing
Shenzhen, Guangdong 518129 (CN)**
• **MA, Jianglei
Shenzhen, Guangdong 518129 (CN)**

(74) Representative: **Thun, Clemens
Mitscherlich PartmbB
Patent- und Rechtsanwälte
Karlstraße 7
80333 München (DE)**

(54) **COMMUNICATION METHOD AND APPARATUS**

(57)      This application discloses a communication method apparatus. The method includes: A second apparatus sends first information to a first apparatus, where the first information is used to determine a first moment at which first data is generated and a second moment at which the first data is sent. Then, the first apparatus may send, at the second moment, the first data generated at the first moment. According to the method, the second apparatus indicates a generation moment and a sending moment of data of the first apparatus, so that time elapsed for the data can be controlled, to improve real-time performance of data transmission.

FIG. 3

**Description**

TECHNICAL FIELD

This application relates to the field of communication technologies, and in particular, to a communication method and apparatus.

BACKGROUND

With continuous development of artificial intelligence (artificial intelligence, AI)/machine learning (machine learning, ML), terminal sensing, and other related technologies, these technologies have important application potential in many aspects such as complex and unknown environment modeling and learning, channel prediction, intelligent signal generation and processing, network status tracking and intelligent scheduling, channel and service sensing, and network optimization deployment, and are of great significance and value to research on a mobile communication technology evolved after a 5th generation (5th generation, 5G), for example, a 6th generation (6th generation, 6G).

In the AI/ML technology, sensing, and other related technologies, training data collection and AI model training may not be performed in one device. Therefore, transmission of training data needs to be performed between devices. How to improve real-time performance of data transmission between devices is a technical problem to be resolved in this application.

SUMMARY

This application provides a communication method and apparatus, to improve real-time performance of data transmission between devices.

According to a first aspect, an embodiment of this application provides a communication method. The method includes: A first apparatus may receive first information from a second apparatus. The first information may be used to determine a first moment at which first data is generated and a second moment at which the first data is sent. Then, the first apparatus may send the first data at the second moment.

According to the method, the second apparatus may indicate a generation moment and a sending moment of data of the first apparatus, so that time elapsed for the data can be controlled, to improve real-time performance of data transmission between the first apparatus and the second apparatus.

In a possible design, a time interval between the first moment and a first reference moment may be a first time interval, and a time interval between the second moment and the first reference moment may be a second time interval. The first reference moment is determined based on the first information. According to this design, the second apparatus may indicate the generation moment and the sending moment of the data by using one piece of information, so that overheads for indicating the generation moment and the sending moment of the data can be reduced.

In a possible design, the first reference moment is a receiving moment of the first information, or the first information includes the first reference moment. According to this design, the first apparatus may flexibly and accurately determine the first reference moment.

In a possible design, the first time interval is included in the first information, or the first time interval is predefined; and/or the second time interval is included in the first information, or the second time interval is predefined. According to this design, the first apparatus may flexibly and accurately determine the first time interval and the second time interval.

In a possible design, the first information may include the first moment and/or the second moment. This design may directly indicate the first moment and/or the second moment, and is easy to implement.

In a possible design, the first apparatus may further receive fourth information from the second apparatus, where the fourth information indicates a size of the first data. According to this design, the second apparatus may indicate the size of the first data of the first apparatus, so that the first data that meets a requirement of the second apparatus can be obtained. For example, the size of the first data may meet a requirement of an AI model in the second apparatus.

In a possible design, the first information includes fifth information used to determine the first moment and sixth information used to determine the second moment. In this design, the fifth information and the sixth information respectively indicate the generation moment and the sending moment of the data, so that overheads of each piece of information can be reduced, and a transmission success rate of each piece of information can be improved.

In a possible design, the fifth information is included in a first message, the sixth information is included in a second message, and there is an association relationship between the first message and the second message. According to this design, when a plurality of pieces of data need to be transmitted between the first apparatus and the second apparatus, the first apparatus may determine an association relationship between a generation moment and a sending moment of each piece of data based on the association relationship, to send each piece of data at a correct moment.

In a possible design, a time interval between the first moment and a second reference moment may be a third time interval, and a time interval between the second moment and a third reference moment may be a fourth time interval. The second reference moment is determined based on the fifth information, and the third reference moment is determined based on the sixth information. This design provides a relationship between the fifth information and the first moment and a relationship between the sixth information and the second moment, and is easy to implement. According to this design, the first apparatus may accurately determine the first moment and the second moment.

In a possible design, the second reference moment is a receiving moment of the fifth information, or the fifth information includes the second reference moment; and/or the third reference moment is a receiving moment of the sixth information, or the sixth information includes the third reference moment. According to this design, the first apparatus may flexibly and accurately determine the second reference moment and the third reference moment.

In a possible design, the third time interval is included in fifth information, or the third time interval is predefined; and/or the fourth time interval is included in the sixth information, or the fourth time interval is predefined. According to this design, the first apparatus may flexibly and accurately determine the third time interval and the fourth time interval.

In a possible design, the fifth information includes the first moment, and/or the sixth information includes the second moment. This design may directly indicate the first moment and/or the second moment, and is easy to implement.

In a possible design, the first information includes information used to determine a first time range and/or information used to determine a second time range, the first time range is a time range for generating data, and the second time range is a time range for sending the data. The first moment belongs to the first time range, and the second moment belongs to the second time range. According to this design, the second apparatus may set, for the first apparatus, the first time range for generating the data and the second time range for sending the data. In this way, the first apparatus may generate the data in the first time range, and send the data in the second time range. The second apparatus may control the generation moment and the sending moment of the data by controlling the first time range and the second time range, to control the time elapsed for the data, and further improve real-time performance of the data.

In a possible design, when there is no resource used for data transmission in the second time range, the first apparatus may send a first request to the second apparatus after generating the first data at the first moment. The first request is used to request the second apparatus to allocate a resource to the first data. After receiving seventh information from the second apparatus, the first apparatus may send the first data to the second apparatus on a resource indicated by the seventh information. According to this design, when there is no resource used for data transmission in the second time range, the first apparatus may request, in time, the resource used for transmission of the first data, to ensure real-time performance of the first data.

In a possible design, the first apparatus may further send first assistance information to the second apparatus, where the first assistance information is used to determine the first moment and/or the second moment. Optionally, the first assistance information includes at least one of the following: an energy status of the first apparatus, sampling overheads of the first apparatus, and a computing resource capacity of the first apparatus. According to this design, the first apparatus may send the first assistance information to the second apparatus. In this way, the second apparatus may properly determine the generation moment and the sending moment of the data based on the first assistance information, to improve the real-time performance of the data transmission between the first apparatus and the second apparatus.

In a possible design, the first apparatus may preferentially multiplex, based on the first information, a logic channel corresponding to the first data. The first data may be data that has a freshness requirement. According to this design, the first apparatus may preferentially multiplex data that has a freshness requirement, to ensure real-time performance of the data.

According to a second aspect, an embodiment of this application provides a communication method. The method includes: A first apparatus may send second information to a second apparatus, and send first data at a second moment. The second information indicates a first moment at which the first apparatus generates first data.

According to the method, the first apparatus may send, to the second apparatus, information indicating a generation moment of data. In this way, the second apparatus may perform more proper processing on the data based on the generation moment of the data.

In a possible design, the first apparatus may further receive third information from the second apparatus. The third information is used to determine the second moment, and the second moment may be determined based on the first moment indicated by the second information. According to this design, a sending moment of the data may be determined based on the generation moment of the data, so that time elapsed for the data can be controlled, to improve real-time performance of data transmission between the first apparatus and the second apparatus.

In a possible design, the first apparatus may further send first assistance information to the second apparatus, where the first assistance information is used to determine the first moment and/or the second moment. Optionally, the first assistance information includes at least one of the following: an energy status of the first apparatus, sampling overheads of the first apparatus, and a computing resource capacity of the first apparatus. According to this design, the first apparatus may send the first assistance information to the second apparatus. In this way, the second apparatus may properly determine the generation moment and the sending moment of the data based on the first assistance information, to improve the real-time performance of the data transmission between the first apparatus and the second apparatus.

In a possible design, the first apparatus may preferentially multiplex, based on first information, a logic channel corresponding to the first data. The first data may be data that has a freshness requirement. According to the method, the first apparatus may preferentially multiplex data that has a freshness requirement, to ensure real-time performance of the data.

According to a third aspect, an embodiment of this application provides a communication method. The method includes: A second apparatus may send first information to a first apparatus, where the first information is used to determine a first moment at which first data is generated and a second moment at which the first data is sent. Then, the second apparatus may receive the first data from the first apparatus.

According to the method, the second apparatus may indicate a generation moment and a sending moment of data of the first apparatus, so that time elapsed for the data can be controlled, to improve real-time performance of data transmission between the first apparatus and the second apparatus.

In a possible design, a time interval between the first moment and a first reference moment is a first time interval, a time interval between the second moment and the first reference moment is a second time interval, and the first reference moment is determined based on the first information. According to this design, the second apparatus may indicate the generation moment and the sending moment of the data by using one piece of information, so that overheads for indicating the generation moment and the sending moment of the data can be reduced.

In a possible design, the first reference moment is a sending moment of the first information, or the first information includes the first reference moment. According to this design, the first apparatus may flexibly and accurately determine the first reference moment.

In a possible design, the first time interval is included in the first information, or the first time interval is predefined; and/or the second time interval is included in the first information, or the second time interval is predefined. According to this design, the first apparatus may flexibly and accurately determine the first time interval and the second time interval.

In a possible design, the first information includes the first moment and/or the second moment. This design may directly indicate the first moment and/or the second moment, and is easy to implement.

In a possible design, the second apparatus may further send fourth information to the first apparatus, where the fourth information indicates a size of the first data. According to this design, the second apparatus may indicate the size of the first data of the first apparatus, so that the first data that meets a requirement of the second apparatus can be obtained. For example, the size of the first data may meet a requirement of an AI model in the second apparatus.

In a possible design, the first information includes fifth information used to determine the first moment and sixth information used to determine the second moment. In this design, the fifth information and the sixth information respectively indicate the generation moment and the sending moment of the data, so that overheads of each piece of information can be reduced, and a transmission success rate of each piece of information can be improved.

In a possible design, the fifth information is included in a first message, the sixth information is included in a second message, and there is an association relationship between the first message and the second message. According to this design, when a plurality of pieces of data need to be transmitted between the first apparatus and the second apparatus, the first apparatus may determine an association relationship between a generation moment and a sending moment of each piece of data based on the association relationship, to send each piece of data at a correct moment.

In a possible design, a time interval between the first moment and a second reference moment is a third time interval, a time interval between the second moment and a third reference moment is a fourth time interval, the second reference moment is determined based on the fifth information, and the third reference moment is determined based on the sixth information. This design provides a relationship between the fifth information and the first moment and a relationship between the sixth information and the second moment, and is easy to implement. According to this design, the first apparatus may accurately determine the first moment and the second moment.

In a possible design, the second reference moment is a receiving moment of the fifth information, or the fifth information includes the second reference moment; and/or the third reference moment is a receiving moment of the sixth information, or the sixth information includes the third reference moment. According to this design, the first apparatus may flexibly and accurately determine the second reference moment and the third reference moment.

In a possible design, the third time interval is included in fifth information, or the third time interval is predefined; and/or the fourth time interval is included in the sixth information, or the fourth time interval is predefined. According to this design, the first apparatus may flexibly and accurately determine the third time interval and the fourth time interval.

In a possible design, the fifth information includes the first moment, and/or the sixth information includes the second moment. This design may directly indicate the first moment and/or the second moment, and is easy to implement.

In a possible design, the first information includes information used to determine a first time range and/or information used to determine a second time range, the first time range is a time range for generating data, and the second time range is a time range for sending the data. The first moment belongs to the first time range, and the second moment belongs to the second time range. According to this design, the second apparatus may set, for the first apparatus, the first time range for generating the data and the second time range for sending the data. In this way, the first apparatus may generate the data in the first time range, and send the data in the second time range. The second apparatus may control the generation moment and the sending moment of the data by controlling the first time range and the second time range, to control the time elapsed for the data, and further improve real-time performance of the data.

In a possible design, when there is no resource used for data transmission in the second time range, the second apparatus may receive a first request from the first apparatus. The first request is used to request the second apparatus to allocate a resource to the first data. Then, after sending, to the first apparatus, seventh information indicating the resource, the second apparatus may receive the first data from the first apparatus on the resource. According to this design, when there is no resource used for data transmission in the second time range, the first apparatus may request, in time, the resource used for transmission of the first data, to ensure real-time performance of the first data.

In a possible design, the second apparatus may further receive first assistance information from the first apparatus, where the first assistance information is used to determine the first moment and/or the second moment. Optionally, the first assistance information includes at least one of the following: an energy status of the first apparatus and sampling overheads of the first apparatus. According to this design, the second apparatus may properly determine the generation moment and the sending moment of the data based on the first assistance information, to improve the real-time performance of the data.

According to a fourth aspect, an embodiment of this application provides a communication method. The method includes: A second apparatus may receive second information and first data from a first apparatus. The second information indicates a first moment at which the first apparatus generates the first data.

According to the method, the first apparatus may send, to the second apparatus, information indicating a generation moment of data. In this way, the second apparatus may perform more proper processing on the data based on the generation moment of the data.

In a possible design, the second apparatus may further send third information to the first apparatus. The third information is used to determine a second moment at which the first data is sent, and the second moment may be determined based on the first moment indicated by the second information. According to this design, a sending moment of the data may be determined based on the generation moment of the data, so that time elapsed for the data can be controlled, to improve real-time performance of the data.

In a possible design, the second apparatus may further receive first assistance information from the first apparatus, where the first assistance information is used to determine the first moment and/or the second moment. Optionally, in a possible design, the first assistance information includes at least one of the following: an energy status of the first apparatus and sampling overheads of the first apparatus. According to this design, the second apparatus may properly determine the generation moment and the sending moment of the data based on the first assistance information, to improve the real-time performance of the data.

According to a fifth aspect, an embodiment of this application provides a communication method. The method includes: A first apparatus may receive second assistance information from a third apparatus, and/or receive computing information from a second apparatus. The second assistance information may include at least one of the following: an energy status of the third apparatus, sampling overheads of the third apparatus, a moment at which the third apparatus generates data, and a computing resource capacity of the third apparatus. Then, the first apparatus may generate first data at a first moment based on the second assistance information and/or the computing information, and send the first data to the second apparatus at a second moment.

The third apparatus may be a device configured to send data to the second apparatus. For example, both the first apparatus and the third apparatus may send, to the second apparatus, data used to train an AI model in the second apparatus.

According to the method, the first apparatus may properly determine a generation moment and a sending moment of data based on the second assistance information and/or the computing information of the second apparatus, so that data sent by the first apparatus and data sent by the third apparatus to the second apparatus do not overlap as much as possible in time domain, and the generation moment of the first apparatus matches a computing capability of the second apparatus, to control time elapsed for the data, and further improve real-time performance of overall data in a system.

In a possible design, the first apparatus may further receive eighth information from the second apparatus. The eighth information includes information indicating a second time range, and the second time range is a time range for sending the first data. The second moment belongs to the second time range. According to this design, the first apparatus may properly determine the sending moment of the data based on the eighth information, to control the time elapsed for the data, and further improve real-time performance of the data.

According to a sixth aspect, an embodiment of this application provides a communication method. The method includes: A second apparatus may send computing information to a first apparatus, where the computing information is used to determine a first moment at which first data is generated. Then, the second apparatus may receive the first data sent by the first apparatus at a second moment.

According to the method, the second apparatus may send the computing information of the second apparatus to the first apparatus. In this way, the first apparatus may properly determine a generation moment and a sending moment of data, so that the generation moment of the first apparatus matches a computing capability of the second apparatus, to control time elapsed for the data, and further improve real-time performance of overall data in a system.

In a possible design, the second apparatus may further send eighth information to the first apparatus. The eighth information includes information indicating a second time range, and the second time range is a time range for sending the data. The second moment belongs to the second time range. According to this design, the second apparatus may provide the first apparatus with the time range for sending the data. In this way, the first apparatus may properly determine the sending moment of the data, to control the time elapsed for the data, and further improve real-time performance of the data.

According to a seventh aspect, an embodiment of this application provides a communication apparatus, including units configured to perform steps in any one of the foregoing aspects.

According to an eighth aspect, an embodiment of this application provides a communication apparatus, including at least one processing element and at least one storage element. The at least one storage element is configured to store a program and data, and the at least one processing element is configured to read and execute the program and the data that are stored in the storage element, so that the method according to any one of the foregoing aspects of this application is implemented.

According to a ninth aspect, an embodiment of this application provides a communication system, including a first apparatus configured to perform the method according to the first aspect, and a second apparatus configured to perform the method according to the third aspect.

According to a tenth aspect, an embodiment of this application provides a communication system, including a first apparatus configured to perform the method according to the second aspect, and a second apparatus configured to perform the method according to the fourth aspect.

According to an eleventh aspect, an embodiment of this application provides a communication system, including a first apparatus configured to perform the method according to the fifth aspect, and a second apparatus configured to perform the method according to the sixth aspect.

According to a twelfth aspect, an embodiment of this application further provides a computer program. When the computer program is run on a computer, the computer is enabled to perform the method according to any one of the foregoing aspects.

According to a thirteenth aspect, an embodiment of this application further provides a computer program. When the computer program is run on a computer, the computer is enabled to perform the method according to any one of the foregoing aspects.

According to a fourteenth aspect, an embodiment of this application further provides a computer-readable storage medium. The computer-readable storage medium stores a computer program. When the computer program is executed by a computer, the computer is enabled to perform the method according to any one of the foregoing aspects.

According to a fifteenth aspect, an embodiment of this application further provides a chip. The chip is configured to: read a computer program stored in a memory, and perform the method according to any one of the foregoing aspects.

According to a sixteenth aspect, an embodiment of this application further provides a chip system. The chip system includes a processor, configured to support a computer apparatus in implementing the method according to any one of the foregoing aspects. In a possible design, the chip system further includes a memory, and the memory is configured to store a program and data that are necessary for the computer apparatus. The chip system may include a chip, or may include a chip and another discrete component.

For technical effects that can be achieved in any one of the seventh aspect to the sixteenth aspect, refer to descriptions of technical effects that can be achieved in any possible design in any one of the first aspect to the fourth aspect. Repeated parts are not described.

BRIEF DESCRIPTION OF DRAWINGS

FIG. 1 is a diagram of an architecture of a communication system according to an embodiment of this application;

FIG. 2A is a diagram of a relationship between an age of information (age of information, AOI) and time according to an embodiment of this application;

FIG. 2B is a diagram of a relationship between a generation moment and a receiving moment of data according to an embodiment of this application;

FIG. 2C is a diagram of another relationship between a generation moment and a receiving moment of data according to an embodiment of this application;

FIG. 2D is a diagram of time elapsed for training data according to an embodiment of this application;

FIG. 2E is a flowchart of a logic channel (logic channel, LC) multiplexing method according to an embodiment of this application;

FIG. 2F is a flowchart of performing an LC multiplexing method based on an LC priority in the LC multiplexing method according to an embodiment of this application;

FIG. 3 is a flowchart of a first communication method according to an embodiment of this application;

FIG. 4 is a flowchart of a second communication method according to an embodiment of this application;

FIG. 5 is a diagram of a buffer state report (buffer state report, BSR) according to an embodiment of this application;

FIG. 6 is a flowchart of a third communication method according to an embodiment of this application;

FIG. 7 is a flowchart of a fourth communication method according to an embodiment of this application;

FIG. 8 is a flowchart of a fifth communication method according to an embodiment of this application;

FIG. 9 is a flowchart of a sixth communication method according to an embodiment of this application;

FIG. 10A is a diagram of a first time range according to an embodiment of this application;

FIG. 10B is a diagram of a second time range according to an embodiment of this application;

FIG. 11 is a flowchart of a seventh communication method according to an embodiment of this application;

FIG. 12 is a flowchart of an eighth communication method according to an embodiment of this application;

FIG. 13 is a diagram of a structure of a communication apparatus according to an embodiment of this application; and

FIG. 14 is a diagram of a structure of another communication apparatus according to an embodiment of this application.

## DESCRIPTION OF EMBODIMENTS

Embodiments of this application provide a communication method and apparatus. The method and the apparatus are based on a same technical concept. Because problem-resolving principles of the method and the apparatus are similar, mutual reference may be made to implementations of the apparatus and the method, and repeated parts are not described again.

In descriptions of embodiments of this application, unless otherwise specified, a quantity of nouns indicates "a singular noun or a plural noun", that is, "one or more". "At least one" means one or more, and "a plurality of" means two or more. The term "and/or" is used to describe an association relationship between associated objects and represents that three relationships may exist. For example, A and/or B may represent the following three cases: Only A exists, both A and B exist, and only B exists. The character "/" generally indicates an "or" relationship between the associated objects. "At least one of the following items (pieces)" or a similar expression thereof means any combination of these items (pieces), including any combination of singular items (pieces) or plural items (pieces).

In addition, it should be understood that in descriptions of this application, terms such as "first" and "second" are merely used for distinguishing and description, but should not be understood as indicating or implying relative importance, or should not be understood as indicating or implying a sequence.

The communication method provided in embodiments of this application may be applied to a 4th generation (4th generation, 4G) communication system, for example, a long term evolution (long term evolution, LTE) communication system, or may be applied to a 5th generation (5th generation, 5G) communication system, for example, a 5G new radio (new radio, NR) communication system, or applied to various communication systems evolved after 5G, for example, a 6G communication system. The method provided in embodiments of this application may be further applied to a Bluetooth system, a wireless fidelity (wireless fidelity, Wi-Fi) system, a long range radio (long range radio, LoRa) system, or an internet of vehicles system. The method provided in embodiments of this application may be further applied to a satellite communication system. The satellite communication system may be integrated with the foregoing communication system.

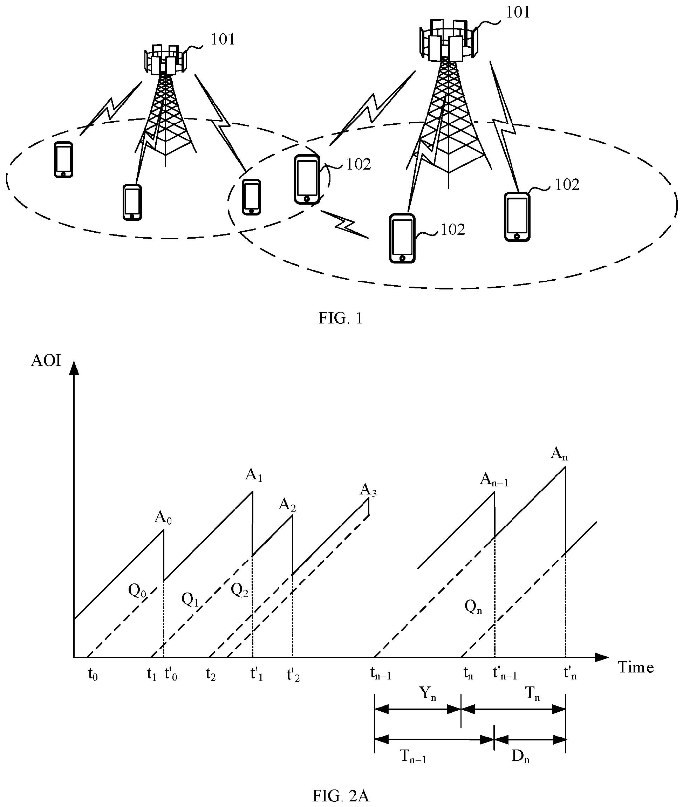

For ease of understanding of embodiments of this application, an application scenario to which this application is applicable is described by using an architecture of a communication system shown in FIG. 1 as an example. Refer to FIG. 1. The communication system includes a network device 101 and a terminal device 102. An apparatus provided in embodiments of this application may be used in the network device 101 or the terminal device 102. It may be understood that FIG. 1 shows only one possible architecture of a communication system to which embodiments of this application may be applied. In another possible scenario, the architecture of the communication system may alternatively include another device.

Optionally, based on the architecture shown in FIG. 1, communication may be performed between the network device 101 and the terminal device 102, between different network devices 101, and between different terminal devices 102. For example, the terminal device 102 may communicate with the network device 101 through a radio air interface. For another example, different network devices 101 may communicate with each other in a wired manner. For another example, different terminal devices 102 may communicate with each other through a direct communication interface.

The network device 101 is a node in a radio access network (radio access network, RAN), and may also be referred to as a base station, a RAN node (or device), or an access network (access network, AN) node (or device). Currently, examples of some network devices 101 are: a base station gNB/NR-NB in NR, a transmission reception point (transmission reception point, TRP), an evolved NodeB (evolved NodeB, eNB), a home base station (for example, a home evolved NodeB or a home NodeB, HNB), a baseband unit (baseband unit, BBU), a Wi-Fi access point (access point, AP), a satellite device, a network device in a 5G communication system, or a network device in a communication system evolved after 5G.

The network device 101 may alternatively be another device having a network device function. For example, the network device 101 may alternatively be a device that functions as a base station in device-to-device (device-to-device, D2D) communication, vehicle-to-everything communication, machine-to-machine communication, or drone communication, or a network device (which may be deployed on a high-altitude platform, a satellite, or a high-altitude aircraft) in a non-terrestrial network (non-terrestrial network, NTN) communication system. A specific form of the network device 101 may be a macro base station configured to provide a macro cell (macro cell), a micro base station configured to provide a pico cell (pico cell), or a femto base station configured to provide a femto cell (femto cell).

In some deployments, the network device may include a central unit (central unit, CU) and a distributed unit (distributed unit, DU). The network device may further include a radio unit (radio unit, RU). Both the CU and the DU can implement some functions of the gNB. It may be understood that the network device may be a CU node, a DU node, or a device including a CU node and a DU node. In addition, the CU may be classified into an access network, or may be classified into a core network. This is not limited herein.

Optionally, the network devices may communicate with each other through a backhaul (backhaul) link. The backhaul link may be a wired backhaul link (for example, an optical fiber or a copper cable), or may be a wireless backhaul link (for example, a microwave).

The terminal device 102 may also be referred to as user equipment (user equipment, UE), a mobile station (mobile station, MS), a mobile terminal (mobile terminal, MT), a wireless terminal, a handheld device, a client, or the like, and is a device that provides voice or data connectivity for a user, or may be an internet of things device. For example, the terminal device includes a handheld device, a vehicle-mounted device, or the like that has a wireless connection function. Currently, the terminal device may be: a mobile phone, a tablet computer, a notebook computer, a palmtop computer, a mobile internet device (mobile internet device, MID), a mobile cellular phone, a cordless phone, a personal digital assistant (personal digital assistant, PDA), customer-premises equipment (customer-premises equipment, CPE), a smart point of sale (point of sale, POS) machine, a wearable device (for example, a smart watch, a smart band, or a pedometer), a vehicle-mounted device (for example, a car, a bicycle, an electric vehicle, an airplane, a ship, a train, or a high-speed rail), a virtual reality (virtual reality, VR) device, an augmented reality (augmented reality, AR) device, a wireless terminal in industrial control, a smart home device (for example, a refrigerator, a television, an air conditioner, or an electricity meter), an intelligent robot, a workshop device, a wireless terminal in self driving, a wireless terminal in remote surgery, a wireless terminal in a smart grid (smart grid), a wireless terminal in transportation safety, a wireless terminal in a smart city, a smartphone, a notebook computer, a tablet computer, a wireless data card, a wireless modulator demodulator (modulator demodulator, Modem), a flight device (for example, an intelligent robot, a hot air balloon, a drone, or an airplane), a household appliance, a vehicle, a tool device, a service device, a service facility, or the like. The terminal device 102 may alternatively be another device having a terminal function. For example, the terminal device may be a device that functions as a terminal in D2D communication.

A terminal device having a wireless transceiver function and a chip that may be disposed in the terminal device are collectively referred to as terminal devices in this application. The terminal device may communicate with a corresponding base station through a radio link.

The following uses the terminal device and the network device as examples to describe the method provided in embodiments of this application.

For example, the network device in this application is configured to provide a radio access service for the terminal device. Specifically, each network device corresponds to a service coverage area, and a terminal device entering the area may communicate with the network device by using a radio signal, to receive the radio access service provided by the network device. Service coverage areas of the network devices may overlap, and a terminal device in an overlapping area may receive radio signals from a plurality of network devices. Therefore, the plurality of network devices may provide services for the terminal device.

For ease of understanding of this application, the following describes terms in this application.

(1) AI learning

AI technologies can be classified into supervised learning, unsupervised learning, and reinforcement learning based on supervision levels.

The supervised learning resolves a known problem and aims to derive a prediction function from labeled training data. The labeled training data means that each training instance includes an input and an expected output. To be specific, a mapping relationship between input data and an output result is learned based on the input data and the output result, and the mapping relationship is applied to an unknown input to obtain a correct output.

The unsupervised learning may also be referred to as active learning or learning without supervision, is a machine learning type used to identify a new pattern and detect an exception, and infers a conclusion from unlabeled training data, that is, training data has no corresponding output result. Typical unsupervised learning is cluster analysis, which can be used to discover a hidden pattern or group data in an exploratory data analysis phase. In other words, the unsupervised learning is characterized by searching for a hidden structure or feature of given data.

For example, supervised information and the unsupervised learning may be separately used to train a model (or may be referred to as an AI model, a machine training model, or the like) based on labeled data or unlabeled data. After the model training is completed, model inference is performed by using unknown candidate data. If overheads are excessively high due to the labeled data in using the supervised learning, an unsupervised learning manner may be used to reduce a quantity of labels and control a size of the training data.

The reinforcement learning may also be referred to as reinforcing learning, and is another field of machine learning. The reinforcement learning includes three elements: a state (state), an action (action), and a reward (reward). This learning manner focuses on how to take an action in an environment to maximize a specific accumulated return. For example, a current state and a current reward are given to learn how to select a series of actions to maximize a long-term reward.

In the foregoing three learning manners, the supervised learning and the unsupervised learning may be applied to offline learning, to be specific, learning a model offline based on a large amount of training data, and after the model learning is completed, actual data is used for inference. The reinforcement learning may be applied to online learning, to be specific, determining, based on the current state and the current reward, an action that can maximize the long-term reward.

(2) Age of information (age of information, AOI)

A key step in online learning is obtaining real-time data, and a parameter of an AI model may be updated in real time with the real-time data. To ensure real-time performance of training data, data freshness needs to be evaluated. Currently, a performance criterion for measuring the data freshness is the AOI. The AOI is a time interval $\Delta(t)$, and may be defined as a time interval between a current moment t and a generation moment $t_n$ of a latest data packet received at the current moment:

$$\Delta(t) = t - max\{t_n: t_n' \leq t\} \qquad (1)$$

$t_n$ is a generation moment (which may also be referred to as a sampling moment) of a received $n^{th}$ data packet, n is a positive integer, $t_n'$ is a receiving moment of the $n^{th}$ data packet, and $max\{t_n: t_n' \leq t\}$ represents a generation moment of a latest data packet received before the current moment t.

It can be learned from the foregoing definition that, if no data packet is successfully received at a moment, the AOI is determined based on a latest data packet received previously. If no data packet is received, the AOI increases by time. Therefore, an iteration rule of the AOI may be represented by the following formula:

$$\Delta(t + 1) = \begin{cases} \Delta(t) + 1, \text{non-transmission moment(non} - \text{delivery time)} \\ t_n' - t_n, \text{transmission moment(delivery time)} \end{cases}.$$

If no data packet is successfully received at a moment, an AOI value is increased by 1; or if a data packet is successfully received at a moment, an AOI value is a difference between a current moment and a generation moment of the data packet. As shown in FIG. 2A, a horizontal axis represents time, and a vertical axis represents the AOI value. $Y_n = t_n - t_{n-1}$, representing an interval between generation moments of two adjacent data packets. $D_n = t_n' - t_{n-1}'$, representing an interval between receiving moments of two adjacent data packets. $T_n = t_n' - t_n$, representing a delay of a data packet, to be specific, an interval between a receiving moment and a generation moment of the data packet. $A_n = Y_n + T_n = T_{n-1} + D_n$, representing a peak value of the AOI.

It is assumed that the current moment t is between $t_2$ and $t_3$, a moment at which the latest data packet is received before the moment t is $t_0'$, and the corresponding generation moment of the data packet is $t_0$. In this case, an AOI value at the moment t is $t - t_0$, and an included angle between the horizontal axis and a line connecting the AOI value on the vertical axis at the moment t and $t_0$ is 45 degrees. Therefore, the AOI value in FIG. 2A is in a sawtooth shape, decreases only at a moment at which the data packet is successfully received, and increases at 45 degrees at another moment.

According to the foregoing definition of the AOI, a sum of AOI values in a period of time may be represented by a sum of trapezoidal areas $Q_n$ in FIG. 2A, where $Q_n$ may be represented as an area difference between two triangles:

$$Q_n = \frac{1}{2}(Y_n + T_n)^2 - \frac{1}{2}T_n^2 = Y_n T_n + Y_n^2/2.$$

An average value of the AOI (that is, an average AOI) may be represented by using an expectation of $Q_n$ and an expectation of a generation interval $Y_n$ of the data packet:

$$\Delta = \frac{\mathrm{E}[Q_n]}{\mathrm{E}[Y_n]} = \frac{\mathrm{E}[Y_n T_n] + \mathrm{E}[Y_n^2]/2}{\mathrm{E}[Y_n]}$$

.

It can be learned from the foregoing formula that the average AOI may be determined based on the generation interval $Y_n$ of the data packet and the delay $T_n$ of the data packet. $T_n$ may be represented as:

$$T_n = t_n' - t_n = W_n + S_n.$$

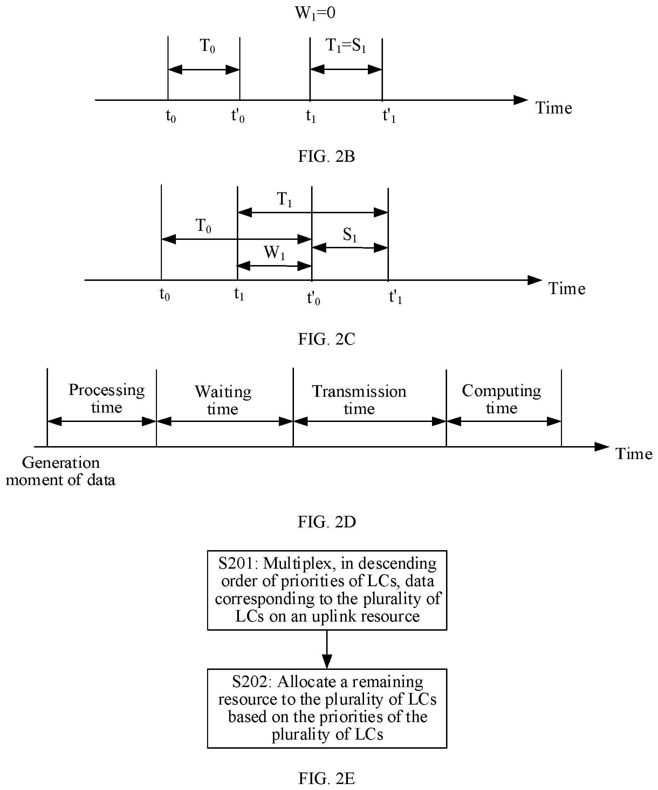

$S_n$ is service time of the $n^{th}$ data packet, to be specific, an interval between a moment at which the $n^{th}$ data packet starts to be transmitted and a moment at which the $n^{th}$ data packet is successfully received. $W_n$ is waiting time of the $n^{th}$ data packet in a queue, and may be represented as $W_n = (T_{n-1} - Y_n)^+$. When there is no other data packet in the queue, $W_n = 0$. For example, as shown in FIG. 2B, when a $1^{st}$ data packet is generated, a $0^{th}$ data packet has been successfully received, that is, $t_1 > t_0'$. In this case, the $1^{st}$ data packet can be directly transmitted without waiting. Waiting time of the $1^{st}$ data packet is $W_1 = 0$, service time is $S_1 = t_1' - t_1$, and a delay is $T_1 = S_1$.

When there is another data packet in the queue, $W_n = T_{n-1} - Y_n$. For example, as shown in FIG. 2C, when a $1^{st}$ data packet is generated, a $0^{th}$ data packet has not been successfully received, that is, $t_1 < t_0'$. In this case, the $1^{st}$ data packet can start to be transmitted only after the $0^{th}$ data packet is successfully received. Waiting time of the $1^{st}$ data packet is $W_1 = T_0 - Y_1$, service time is $S_1 = t_1' - t_0'$, and a delay is $T_1 = W_1 + S_1$.

$Y_n$ is negatively correlated with $T_n$. A larger value of $Y_n$ indicates a larger interval between the generation moments of the adjacent data packets, a looser transmission queue of the data packet, and a smaller transmission delay $T_n$ of each data packet. A smaller value of $Y_n$ indicates a smaller interval between the generation moments of the adjacent data packets, a more congested transmission queue of the data packet, and a larger transmission delay $T_n$ of each data packet. To reduce the average AOI and ensure the real-time performance of the data, it is necessary to seek a balance between $Y_n$ and $T_n$.

(3) Time elapsed for training data

In online learning, training data collection and AI model training may not be performed in one device. For example, the training data collection may be completed by some data collectors (for example, terminal devices) in an energy saving state or with a weak computing capability. After obtaining the training data, the terminal device may send the training data to network data, and the network device trains the AI model. As shown in FIG. 2D, in this example, the time elapsed for the training data may include the following.

Processing time: In the processing time, the terminal device may generate data, and perform coding and modulation on the data, and the like.

Waiting time: The waiting time is waiting time of the data in a queue. For specific content, refer to the foregoing $W_n$.

Transmission time: The transmission time is time for transmitting the data from the terminal device to the network device. In the transmission time, the terminal device may perform initial transmission and/or retransmission on the data.

Computing time: The computing time may include time 1 and time 2. The time 1 is time for which the network device waits for training data from another terminal device after receiving the training data of the terminal device. An AI model in the network device may need to be trained by using training data of a plurality of terminal devices. For example, the AI model in the network device needs to be trained by using training data of a terminal device 1 to a terminal device 4. If the network device does not receive the training data of the terminal device 2 to the terminal device 4 when receiving the training data of the terminal device 1, the network device can train the AI model only after receiving the training data of the terminal device 2 to the terminal device 4. In this case, the time 1 is greater than 0. If the network device has received the training data of the terminal device 2 to the terminal device 4 when receiving the training data of the terminal device 1, the time 1 may be equal to 0. The time 2 is computing time needed for performing one iteration on the AI model, and is also referred to as computing duration.

The processing time and the time 2 may be determined based on a size of the training data, and the waiting time, the transmission time, and the time 1 may be determined based on a generation moment and a sending moment of the data. The time elapsed for the training data may be controlled by controlling the size, the generation moment, and the transmission moment of the data, to control real-time performance of the data.

(4) Logic channel group (logic channel group, LCG): The logic channel group may include a plurality of logic channels (logic channels, LCs). A parameter of each LC may be configured by a network device. For example, configuration information of each LC includes parameters such as an index and a priority of the LCG. When configuring the parameter of the LC, the network device may configure LCs with a same priority or similar priorities in one LCG.

When a terminal device sends data, a medium access control (media access layer, MAC) layer of the terminal device may multiplex data corresponding to a plurality of LCs on an uplink resource, that is, perform LC multiplexing (which may also be referred to as MAC multiplexing). The MAC layer may perform LC multiplexing based on priorities of a plurality of LCs. An LC multiplexing method is specifically described below with reference to FIG. 2E.

S201: The MAC layer multiplexes, in descending order of priorities of the LCs, the data corresponding to the plurality of LCs on the uplink resource.

The MAC layer may multiplex, by using a token bucket (token bucket) algorithm, the data corresponding to the plurality of LCs on the uplink resource. A basic idea of the algorithm is to determine, based on whether there is a token in a token bucket and a quantity of tokens, whether to multiplex data of an LC, and control a data amount of the LC assembled into a MAC protocol data unit (protocol data unit, PDU).

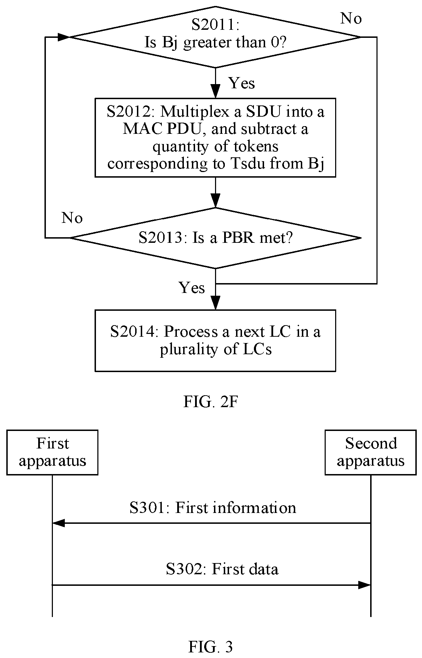

As shown in FIG. 2F, S201 may include the following steps.

S2011: The MAC layer determines whether a variable $Bj$ of $LCj$ is greater than 0. If $Bj$ is greater than 0, S2012 is performed; or if $Bj$ is less than or equal to 0, S2014 is performed.

$LCj$ is any one of the plurality of LCs. $Bj$ may indicate a quantity of available tokens (tokens) in a token bucket corresponding to $LCj$, and each token corresponds to 1 byte (Byte) of data.

A maximum capacity of the token bucket corresponding to $LCj$ is $PBR \times BSD$. A prioritized bit rate (prioritized bit rate, PBR) may be used to determine a "bottom area" of the token bucket, and bucket size duration (bucket size duration, BSD) may be used to determine a "depth" of the token bucket. The maximum capacity of the token bucket is a maximum amount of data that can be pended (pended, to be specific, buffered in a buffer (buffer)) by $LCj$.

When $LCj$ is established, $Bj$ is initialized to 0. Then, $Bj$ increases by $PBR \times TTI$ each time a transmission time interval (transmission time interval, TTI) elapses. For example, if a PBR corresponding to a parameter prioritized bit rate (prioritizedBitRate) is kBps8, the PBR is 8 kilobytes per second (kBps). That is, a token of 8 kBps*1 millisecond (ms)=8 bytes may be injected into the token bucket corresponding to $LCj$ in each TTI.

In addition, a value of $Bj$ is less than or equal to a quantity of tokens corresponding to a first capacity, and the first capacity is the maximum capacity of the token bucket corresponding to $LCj$. For example, if the BSD=500 ms and the PBR is 8 kBps, the maximum capacity of the token bucket corresponding to $LCj$ is 8 kBps*500 ms=4k bytes. In this case, $Bj$ is less than or equal to 4 thousand (k).

S2012: The MAC layer multiplexes a service data unit (service data unit, SDU) corresponding to $LCj$ into the MAC PDU, and subtracts a quantity of tokens corresponding to $Tsdu$ from $Bj$.

The SDU is a basic unit of LC multiplexing, one MAC PDU may include a plurality of SDUs, and $Tsdu$ is a data amount of the SDU. For example, when $Tsdu$ is 8 bytes, $Bj-8$ is executed in S2012.

S2013: The MAC layer determines whether $LCj$ meets the PBR. If $LCj$ meets the PBR, S2014 is performed; or if $LCj$ does not meet the PBR, S2011 is performed.

When a first data amount is greater than or equal to a data amount corresponding to PBR*BSD, $LCj$ meets the PBR; or when a first data amount is less than a data amount corresponding to PBR*BSD, $LCj$ does not meet the PBR. The first data amount is a total data amount of the SDU that is multiplexed into the MAC PDU and that corresponds to $LCj$.

S2014: The MAC layer processes a next LC in the plurality of LCs.

The next LC may be an LC with a priority ranking immediately below that of $LCj$ in the plurality of LCs. For a method for processing the next LC by the MAC layer, refer to the method for processing $LCj$ in S2011 to S2013. Details are not described herein again.

In addition, S2014 is an optional step. For example, if $LCj$ in S2011 to S2013 is an LC with a lowest priority in the plurality of LCs, S2014 is an optional step.

S202: If an available uplink resource of the terminal device further includes a remaining resource after S201, the MAC layer may allocate the remaining resource to the plurality of LCs based on the priorities of the plurality of LCs.

In this case, the MAC layer may not consider $Bj$. For example, after S201, the data corresponding to the plurality of LCs further includes data corresponding to an LC 1 and data corresponding to an LC 2. If a priority of the LC 1 is higher than a priority of the LC 2, after mapping all data corresponding to the LC 1 to the remaining resource, the MAC layer maps the data corresponding to the LC 2 to the remaining resource.

(5) Receiving moment and sending moment of information

In this application, a sending device and a receiving device are synchronous. Therefore, when the sending device sends information to the receiving device, a receiving moment and a sending moment of the information are the same. For example, both the receiving moment and the sending moment of the information are in a 4th slot.

(6) In this application, a unit of the moment may be second, millisecond, microsecond, or the like. For example, a moment p may be a pth second, a pth millisecond, a pth microsecond, or the like.

p in the moment p may alternatively be an index of a time unit. In this application, the time unit may be one or more of a slot, a mini-slot, a frame, and a subframe. For example, p in the moment p may be a pth slot, or a pth slot in an oth subframe. The moment p may be a start moment, an end moment, or an intermediate moment of a pth time unit. o and p are positive integers.

The following uses an example in which p in the moment p is the index of the time unit and the moment p is the start moment of the p$^{th}$ time unit for description.

(7) In this application, a first apparatus, a second apparatus, and a third apparatus each may be one of the following: a terminal device, an apparatus in the terminal device, an apparatus used together with the terminal device, a network device, an apparatus in the network device, and an apparatus used together with the network device. The first apparatus, the second apparatus, and the third apparatus are different apparatuses.

(8) In this application, a generation moment of data may be a generation start moment of the data, may be a generation completion moment of the data, or may be a moment in a data generation process. A sending moment of the data may be a sending start moment of the data, may be a sending completion moment of the data, or may be a moment in a data sending process.

In an AI/ML technology, sensing, and other related technologies, training data collection and AI model training may not be performed in one device, and sensing data collection and sensing processing may not be performed in one device. For example, the terminal device reports data to the network device, and the network device performs processing by using the received data. A processing result of the data may be used to optimize mobile network performance and the like. For the online learning, a large amount of real-time training data is needed as an input of the model to obtain a model with high accuracy. How to improve real-time performance of data transmission between devices is a technical problem to be resolved in this application.

To resolve the foregoing technical problem, an embodiment of this application provides a communication method. The method may be applied to the communication system shown in FIG. 1. The following specifically describes a procedure of the method with reference to a flowchart shown in FIG. 3.

S301: A second apparatus sends first information to a first apparatus. Correspondingly, the first apparatus receives the first information from the second apparatus.

The first information may be carried in downlink control information (downlink control information, DCI), sidelink control information (sidelink control information, SCI), or radio resource control (radio resource control, RRC) signaling.

The first information may be used to determine a first moment at which first data is generated and a second moment at which the first data is sent. For example, the first data may be data used to train an AI model in the second apparatus.

In a possible implementation, the first information includes fifth information used to determine the first moment and sixth information used to determine the second moment, and the fifth information and the sixth information may be carried in a same message, or may be carried in different messages.

The following separately describes a relationship between the first information and each of the first moment and the second moment by using Implementation 1 to Implementation 5.

Implementation 1: A time interval between the first moment and a first reference moment is a first time interval, and a time interval between the second moment and the first reference moment is a second time interval.

The first reference moment may be determined based on the first information. In some possible manners, the first reference moment may be a receiving moment of the first information. For example, the first apparatus receives the first information at a moment $T_1$, and $T_1$ is an index of a time unit. In this case, the first reference moment may be a start moment, an end moment, or an intermediate moment of a $T_1{}^{th}$ time unit, or may be a start moment, an end moment, or an intermediate moment of a $(T_1 + \triangle T_1)^{th}$ time unit. $\triangle T_1$ may be predefined in a protocol or preconfigured, and $\triangle T_1$ may be a positive number or a negative number. In some other possible manners, the first information includes the first reference moment. For example, the first information includes a first field, and a value of the first field is an index of a time unit, for example, an index of a 2$^{nd}$ time unit. In this case, the first reference moment is a start moment, an end moment, or an intermediate moment of the 2$^{nd}$ time unit.

In some possible manners, the first time interval may be included in the first information. For example, the first information includes a second field, and a value of the second field is 2, indicating two time units. In this case, the first time interval is two time units. In some other possible manners, the first time interval may alternatively be predefined or preconfigured.

In some possible manners, the second time interval may be included in the first information. For example, the first information includes a third field, and a value of the third field is 5, indicating five time units. In this case, the second time interval is five time units. In some other possible manners, the second time interval may alternatively be predefined or preconfigured.

In this implementation, the second apparatus may indicate a generation moment and a sending moment of data by using one piece of information, so that overheads for indicating the generation moment and the sending moment of the data can be reduced.

Implementation 2: The first information includes the first moment and/or the second moment.

1. The first information includes the first moment and the second moment.

In some possible manners, the first information may include a fourth field and a fifth field, the fourth field indicates the first moment, and the fifth field indicates the second moment. For example, a value of the fourth field is an index of a time unit, for example, an index of a $2^{nd}$ time unit. Similarly, a value of the fifth field is an index of a time unit, for example, an index of a $5^{th}$ time unit. In this case, the first moment is a start moment, an end moment, or an intermediate moment of the $2^{nd}$ time unit, and the second moment is a start moment, an end moment, or an intermediate moment of the $5^{th}$ time unit.

In some other possible manners, the first information may include a sixth field, the sixth field may be a start and length indicator value (start and length indicator, SLIV), a start position indicated by the SLIV may be the first moment, and the start position and a length indicated by the SLIV may be used to determine the second moment. For example, the start position indicated by the SLIV is a $2^{nd}$ time unit, and the length indicated by the SLIV is three time units. In this case, the first moment is a start moment, an end moment, or an intermediate moment of the $2^{nd}$ time unit, and the second moment is a start moment, an end moment, or an intermediate moment of a $5^{th}$ time unit.

2. The first information includes the first moment. In this case, an interval between the first moment and the second moment may be a predefined or preconfigured time interval. In this way, the first apparatus may determine the first moment based on the first information, and determine the second moment based on the first moment and the predefined or preconfigured time interval.

For specific content that the first information includes the first moment, refer to the descriptions of "the first information includes the first moment" in point 1.

3. The first information includes the second moment. In this case, an interval between the first moment and the second moment may be a predefined or preconfigured time interval. In this way, the first apparatus may determine the second moment based on the first information, and determine the first moment based on the second moment and the predefined or preconfigured time interval.

For specific content that the first information includes the second moment, refer to the descriptions of "the first information includes the second moment" in point 1.

Implementation 2 provides a plurality of methods for directly indicating the first moment and/or the second moment, and is easy to implement and flexible in implementation.

Implementation 3: The first information includes the fifth information used to determine the first moment and the sixth information used to determine the second moment. A time interval between the first moment and a second reference moment is a third time interval, and a time interval between the second moment and a third reference moment is a fourth time interval.

The second reference moment may be determined based on the fifth information. In some possible manners, the second reference moment may be a receiving moment of the fifth information. For example, the first apparatus receives the fifth information at a moment $T_2$, and $T_2$ is an index of a time unit. In this case, the second reference moment may be a start moment, an end moment, or an intermediate moment of a $T_2^{th}$ time unit, or may be a start moment, an end moment, or an intermediate moment of a $(T_2+\triangle T_2)^{th}$ time unit. $\triangle T_2$ may be predefined in a protocol or preconfigured, and $\triangle T_2$ may be a positive number or a negative number. In some other possible manners, the fifth information includes the second reference moment. For example, the fifth information includes a seventh field, and a value of the seventh field is an index of a time unit, for example, an index of a $2^{nd}$ time unit. In this case, the second reference moment is a start moment, an end moment, or an intermediate moment of the $2^{nd}$ time unit.

The third reference moment may be determined based on the sixth information. In some possible manners, the third reference moment may be a receiving moment of the sixth information. For example, the first apparatus receives the sixth information at a moment $T_3$, and $T_3$ is an index of a time unit. In this case, the third reference moment may be a start moment, an end moment, or an intermediate moment of a $T_3^{th}$ time unit, or may be a start moment, an end moment, or an intermediate moment of a $(T_3+\triangle T_3)^{th}$ time unit. $\triangle T_3$ may be predefined in a protocol or preconfigured, and $\triangle T_3$ may be a positive number or a negative number. In some other possible manners, the sixth information includes the third reference moment. For example, the sixth information includes an eighth field, and a value of the eighth field is an index of a time unit, for example, an index of a $3^{rd}$ time unit. In this case, the third reference moment is a start moment, an end moment, or an intermediate moment of the $3^{rd}$ time unit.

In some possible manners, the third time interval may be included in the fifth information. For example, the fifth information includes a ninth field, and a value of the ninth field is 2, indicating two time units. In this case, the third time interval is two time units. In some other possible manners, the third time interval may alternatively be predefined or preconfigured.

In some possible manners, the fourth time interval may be included in the sixth information. For example, the sixth information includes a tenth field, and a value of the tenth field is 4, indicating four time units. In this case, the fourth time interval is four time units. In some possible manners, the fourth time interval may alternatively be predefined or preconfigured.

In this implementation, the fifth information and the sixth information respectively indicate a generation moment and a sending moment of data, so that overheads of each piece of information can be reduced, and a transmission success rate of each piece of information can be improved.

Implementation 4: The first information includes the fifth information used to determine the first moment and the sixth information used to determine the second moment. The fifth information includes the first moment, and the sixth information includes the second moment.

For example, the fifth information may include an eleventh field, and a value of the eleventh field is an index of a time unit, for example, an index of a 2nd time unit. The sixth information includes a twelfth field, and a value of the twelfth field is an index of a time unit, for example, an index of a 5th time unit. In this case, the first moment is a start moment, an end moment, or an intermediate moment of the 2nd time unit, and the second moment is a start moment, an end moment, or an intermediate moment of the 5th time unit.

In Implementation 4, the fifth information and the sixth information may directly indicate the first moment and the second moment respectively. This is easy to implement.

In addition, in Implementation 1 to Implementation 4, the second apparatus may determine the generation moment of the data and the sending moment of the data for the first apparatus. The second apparatus may control, by controlling the generation moment and the sending moment of the data, time elapsed for the data, to improve real-time performance of the data.

Optionally, in Implementation 3 and Implementation 4, the fifth information is included in a first message, the sixth information is included in a second message, and there may be an association relationship between the first message and the second message. For example, the first message and the second message are DCI, and indexes of the first message and the second message are the same. In this way, the first apparatus may associate the first data generated based on the first message with the second moment indicated by the second message. For another example, the second message includes information indicating that the first moment is associated with the second moment. For example, the second message includes the first moment. In this way, the first apparatus may associate the first data generated based on the first message with the second moment indicated by the second message. In the method, an association relationship between the first moment and the second moment may be explicitly or implicitly indicated by the association relationship between the first message and the second message. In this way, when there are a plurality of pieces of to-be-transmitted data in the first apparatus, the first apparatus may determine a transmission moment of each piece of data based on the association relationship.

Implementation 5: The first information includes information used to determine a first time range and/or information used to determine a second time range, the first time range is a time range for generating data, and the second time range is a time range for sending the data. The first moment belongs to the first time range, and the second moment belongs to the second time range.

1. The first information includes the information used to determine the first time range and the information used to determine the second time range.

The first information may directly indicate the first time range, that is, the first information may include the first time range. Alternatively, the first information may indirectly indicate the first time range, the first information may include information that has a correspondence with the first time range, and the information is the information used to determine the first time range. For example, the first apparatus and the second apparatus include a correspondence between a plurality of time ranges and a plurality of time range indexes, and the first information includes a time range index corresponding to the first time range.

Similarly, the first information may directly indicate the second time range, that is, the first information may include the second time range. Alternatively, the first information may indirectly indicate the second time range, the first information may include information that has a correspondence with the second time range, and the information is the information used to determine the second time range. For example, the first apparatus and the second apparatus include a correspondence between a plurality of time ranges and a plurality of time range indexes, and the first information includes a time range index corresponding to the second time range.

The information used to determine the first time range and the information used to determine the second time range may be carried in a same message, or may be carried in different messages.

After receiving the first information, the first apparatus may generate the first data in the first time range, and send the first data in the second time range.

2. The first information includes the information used to determine the first time range. For specific content of the information used to determine the first time range, refer to the descriptions of the information used to determine the first time range in point 1. The second time range may be predefined or preconfigured.

In a possible manner, the first apparatus may generate the first data in the first time range. To balance a generation moment and a sending moment of data, the first apparatus may send the first data in the second time range based on the first moment.

In another possible manner, the first time range may be determined based on the predefined or preconfigured second time range. In this way, the first apparatus may generate the first data in the first time range, and send the first data in the second time range.

3. The first information includes the information used to determine the second time range. For specific content of the information used to determine the second time range, refer to the descriptions of the information used to determine the second time range in point 1. The first time range may be predefined or preconfigured.

In a possible manner, the first apparatus may select, from the second time range, the second moment used to send the first data. To balance a generation moment and a sending moment of data, the first apparatus may generate the first data in the first time range based on the second moment.

In another possible manner, the second time range may be determined based on the predefined or preconfigured first time range. In this way, the first apparatus may select, from the first time range, the first moment used to generate the first data, and select, from the second time range, the second moment used to send the first data. In Implementation 5, the second apparatus may set, for the first apparatus, the first time range for generating the data and the second time range for sending the data. In this way, the first apparatus may generate the data in the first time range, and send the data in the second time range. The second apparatus may control the generation moment and the sending moment of the data by controlling the first time range and the second time range, to control time elapsed for the data, and further improve real-time performance of the data.

S302: The first apparatus sends, at the second moment, the first data generated at the first moment.

Optionally, in S302, the first apparatus may preferentially multiplex, based on the first information, an LC corresponding to the first data. For example, the first apparatus includes data that has a freshness requirement and data that has no freshness requirement. The first apparatus may determine, based on the first information, that the first data corresponding to the first information is the data that has a freshness requirement, and preferentially multiplex the LC corresponding to the first data.

The data that has a freshness requirement may include at least one of the following: data used to train the AI model in the second apparatus, data used to determine a sending moment of the data based on a generation moment of the data, and data related to a sensing procedure. The data related to the sensing procedure may include data sensed by a terminal device, for example, information such as a speed, a direction, and a position of an object in an environment sensed by the terminal device, or channel information sensed by the terminal device.

In some possible manners, the first apparatus may first multiplex an LC corresponding to the data that has a freshness requirement, and then perform LC multiplexing based on a priority of the LC. The following provides descriptions with reference to steps H1 to H3.

H1: The first apparatus first multiplexes the LC corresponding to the data that has a freshness requirement.

Optionally, the first apparatus may determine, based on the first information, that the first data corresponding to the first information is the data that has a freshness requirement. For example, if the first moment at which the first data is generated and/or the second moment at which the first data is sent are/is determined based on the first information, it indicates that the first data is the data has a freshness requirement.

H2: After step H1, the first apparatus performs LC multiplexing on remaining data based on a priority of an LC. For a multiplexing manner, refer to step S201. Details are not described herein again.

H3: If an available resource of the first apparatus further includes a remaining resource after step H2, the first apparatus may allocate, based on a priority of an LC, the remaining resource to an LC corresponding to data of the first apparatus.

For example, the first apparatus needs to send data corresponding to an LC 1 to an LC 4. The first data is data corresponding to the LC 2. The first apparatus may first multiplex the LC 2, and then perform LC multiplexing based on priorities of the LC 1, the LC 3, and the LC 4.

In some other possible manners, the first apparatus first multiplexes an LC with a priority higher than a first priority threshold, then multiplexes the LC corresponding to the first data, and then multiplexes another LC. The following provides descriptions with reference to steps I1 to I3.

I1: The first apparatus first multiplexes the LC with a priority higher than the first priority threshold. For a multiplexing manner, refer to step S201. Details are not described herein again.

I2: The first apparatus multiplexes an LC corresponding to the data that has a freshness requirement. For specific content of step I2, refer to step H1. Details are not described herein again.

I3: If an available resource of the first apparatus further includes a remaining resource after step I2, the first apparatus may multiplex an LC with a priority lower than the first priority threshold. For a multiplexing manner, refer to step S201. Details are not described herein again.

I4: If the available resource of the first apparatus further includes a remaining resource after step I3, the first apparatus may allocate, based on a priority of an LC, the remaining resource to an LC corresponding to data of the first apparatus.

For example, the first apparatus needs to send data corresponding to an LC 1 to an LC 4. The first data is data corresponding to the LC 2. Priorities of the LC 1 and the LC 3 are higher than the first priority threshold, and a priority of the LC 4 is higher than a priority of the LC 2. The first apparatus may first multiplex the LC 1 and the LC 3, then multiplex the LC 2, and then multiplex the LC 4.

According to the method, the first apparatus may preferentially multiplex the data that has a freshness requirement, to ensure transmission real-time performance of the data.

Optionally, in the method shown in FIG. 3, the first apparatus may further determine a size of the first data in one of the following manners.

Implementation 1: The first apparatus obtains the size of the first data from the second apparatus. Optionally, the second apparatus sends fourth information to the first apparatus. Correspondingly, the first apparatus receives the fourth information from the second apparatus, where the fourth information indicates the size of the first data.

When a parameter of the AI model in the second apparatus changes, a size of training data needed by the second apparatus may also change. If the second apparatus determines that the size of the training data needed by the second apparatus changes, the second apparatus may send the fourth information to the first apparatus, where the size of the first data indicated by the fourth information may be the size of the training data needed by the second apparatus.

The fourth information may directly or indirectly indicate the size of the first data. For example, the fourth information may include the size of the first data. For another example, the fourth information may include information that has a correspondence with the size of the first data.

In addition, the fourth information and the first information may be carried in a same message, or may be carried in different messages.

In Implementation 1, the second apparatus may indicate the size of the first data of the first apparatus, so that the first data that meets a requirement of the second apparatus can be obtained. For example, the size of the first data may meet a requirement of the AI model in the second apparatus.

In addition, in Implementation 1, the second apparatus may send, to the first apparatus only when the parameter of the AI model changes, information indicating the size of the first data, and does not need to send the information to the first apparatus each time a resource is scheduled, so that overheads can be reduced.

Implementation 2: The first apparatus independently determines the size of the first data.

In Implementation 2, after generating the first data, the first apparatus may send, to the second apparatus, information indicating the size of the first data, so that the second apparatus allocates a resource to the first data based on the size of the first data. For example, after generating the first data, the first apparatus sends a BSR to the second apparatus, where the BSR includes the size of the first data.

In a possible implementation, when a relationship between the first information and each of the first moment and the second moment is the relationship in the foregoing Implementation 5, if there is no resource used for data transmission in the second time range, before S302, the method shown in FIG. 3 further includes steps AI and A2.

A1: After generating the first data at the first moment, the first apparatus sends a first request to the second apparatus. Correspondingly, the second apparatus receives the first request from the first apparatus.

The first request may be used to request the second apparatus to allocate a resource to the first data. The first request may be one piece of one-bit flag (flag or identification) information. For example, when the identification information is 0 or 1, it indicates that there is no resource used for data transmission in the second time range. The first request may be carried in a BSR, a scheduling request (scheduling request, SR), a physical uplink control channel (physical uplink control channel, PUCCH), or a physical uplink shared channel (physical uplink shared channel, PUSCH).

A2: The second apparatus sends seventh information to the first apparatus. Correspondingly, the first apparatus receives the seventh information from the second apparatus. The seventh information may indicate the resource allocated by the second apparatus to the first data.

Optionally, the seventh information may be carried in DCI.

After step A2, in S302, the first apparatus may send the first data to the second apparatus on the resource indicated by the seventh information.

According to the method, if there is no resource used for data transmission in the second time range, the first apparatus may request, in time, the second apparatus to allocate a resource to the first data, so that the first data can be transmitted in time, to improve real-time performance of the first data.

In a possible implementation, before S301, the method further includes steps B1 and B2.

B1: The first apparatus sends first assistance information to the second apparatus. Correspondingly, the second apparatus receives the first assistance information from the first apparatus. The first assistance information may be used to determine the first moment and/or the second moment.

Optionally, the first assistance information includes at least one of the following.

1. Energy status of the first apparatus, where for example, whether the first apparatus is in an energy saving state, whether energy of the first apparatus (for example, a remaining battery capacity of the first apparatus) is greater than a first energy threshold, or whether energy of the first apparatus is less than a second energy threshold.

2. Sampling overheads of the first apparatus, where for example, whether the sampling overheads of the first apparatus are greater than a first overhead threshold, or whether the sampling overheads of the first apparatus are less than a second overhead threshold. The sampling overheads of the first apparatus may be a resource needed by the first apparatus to collect information used to generate the data. For example, the sampling overheads of the first apparatus may be an amount of electricity and/or power needed by the first apparatus to collect the information. In this application, the first apparatus may collect the information and generate the data at a same moment, or may collect the information and generate the data at different moments. A sampling interval for collecting the information is the same as a generation interval for generating the data. Therefore, in this application, the sampling interval and the generation interval may be interchanged.

3. Computing resource capacity of the first apparatus, where for example, whether the computing resource capacity of the first apparatus is greater than a first capacity threshold, or whether the computing resource capacity of the first apparatus is less than a second capacity threshold.

B2: The second apparatus determines the first moment and/or the second moment based on the first assistance information.

When the first apparatus is in the energy saving state or the energy of the first apparatus is less than the second energy threshold, the first apparatus may not perform sampling at any time based on a requirement of the second apparatus, that is, cannot generate the data at any time. In this case, the second apparatus may determine, for the first apparatus, a sampling interval greater than a first sampling interval threshold, and determine, based on the sampling interval, the first moment at which the first data is generated. To balance the generation moment and the sending moment of the data, the second apparatus may determine, for the first apparatus, a transmission interval greater than a first transmission interval threshold, and determine, based on the transmission interval, the second moment at which the first data is sent.

When the energy of the first apparatus is greater than the first energy threshold, the second apparatus may determine, for the first apparatus, a sampling interval less than a second sampling interval threshold, and determine, based on the sampling interval, the first moment at which the first data is generated. To balance the generation moment and the sending moment of the data, the second apparatus may determine, for the first apparatus, a transmission interval less than a second transmission interval threshold, and determine, based on the transmission interval, the second moment at which the first data is sent.

When the sampling overheads of the first apparatus are greater than the first overhead threshold, to reduce system overheads, the second apparatus may determine, for the first apparatus, a sampling interval greater than a third sampling interval threshold, and determine, based on the sampling interval, the first moment at which the first data is generated. To balance the generation moment and the sending moment of the data, the second apparatus may determine, for the first apparatus, a transmission interval greater than a third transmission interval threshold, and determine, based on the transmission interval, the second moment at which the first data is sent.

When the sampling overheads of the first apparatus are less than the second overhead threshold, to reduce system overheads, the second apparatus may determine, for the first apparatus, a sampling interval less than a fourth sampling interval threshold, and determine, based on the sampling interval, the first moment at which the first data is generated. To balance the generation moment and the sending moment of the data, the second apparatus may determine, for the first apparatus, a transmission interval less than a fourth transmission interval threshold, and determine, based on the transmission interval, the second moment at which the first data is sent.

When the computing resource capacity of the first apparatus is greater than the first capacity threshold, a processing capability of the first apparatus is strong, and the second apparatus may determine, for the first apparatus, a sampling interval less than an eleventh sampling interval threshold, and determine, based on the sampling interval, the first moment at which the first data is generated. To balance the generation moment and the sending moment of the data, the second apparatus may determine, for the first apparatus, a transmission interval less than a nineteenth transmission interval threshold, and determine, based on the transmission interval, the second moment at which the first data is sent.

When the computing resource capacity of the first apparatus is less than the second capacity threshold, a processing capability of the first apparatus is weak, and the first apparatus may not perform sampling at any time based on a requirement of the second apparatus, that is, cannot generate the data at any time. In this case, the second apparatus may determine, for the first apparatus, a sampling interval greater than a twelfth sampling interval threshold, and determine, based on the sampling interval, the first moment at which the first data is generated. To balance the generation moment and the sending moment of the data, the second apparatus may determine, for the first apparatus, a transmission interval greater than a twentieth transmission interval threshold, and determine, based on the transmission interval, the second moment at which the first data is sent.

According to the method, the second apparatus may properly determine the generation moment and the sending moment of the data based on the first assistance information, to improve real-time performance of data transmission.

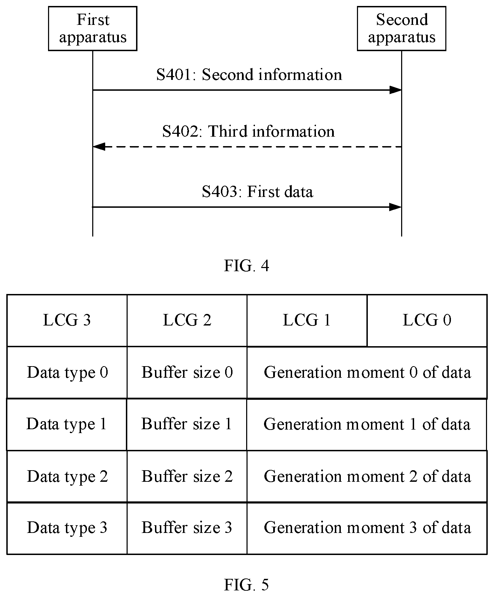

To resolve the foregoing technical problem, an embodiment of this application provides another communication method. The method may be applied to the communication system shown in FIG. 1. The following specifically describes a procedure of the method with reference to a flowchart shown in FIG. 4.

S401: A first apparatus sends second information to a second apparatus. Correspondingly, the second apparatus receives the second information from the first apparatus. The second information indicates a first moment at which the first apparatus generates first data.

The second information may directly or indirectly indicate the first moment. For example, the second information includes the first moment. For another example, the second information includes information that has a correspondence with the first moment.

In a possible implementation, after generating the first data, the first apparatus may send a BSR including the second information to the second apparatus. The BSR may include indexes of a plurality of LCGs or LCs. Each LCG or LC corresponds to at least one of the following: a data type, a buffer size (indicating a size of data corresponding to the LCG or the LC), and a generation moment of the data (indicating the generation moment of the data corresponding to the LCG or the LC). For example, as shown in FIG. 5, the BSR includes an LCG 0 to an LCG 3, and a data type, a buffer size, and a generation moment of data that correspond to each of the LCG 0 to the LCG 3.

In some possible manners, the BSR may include only information about an LCG or an LC corresponding to data that has a freshness requirement. A generation moment of data corresponding to each LCG or LC is an actual generation moment of the data corresponding to the LCG or LC. For example, if the data corresponding to each of the LCG 0 to the LCG 3 in FIG. 5 is the data that has a freshness requirement, the generation moment of the data corresponding to each LCG is an actual generation moment of the data corresponding to the LCG.

In some other possible manners, the BSR may include data that has a freshness requirement and data that has no freshness requirement. In this case, a data generation moment for an LCG or an LC corresponding to the data that has a freshness requirement is an actual generation moment of the data, and a data generation moment for an LCG or an LC corresponding to the data that has no freshness requirement may be set to a default value, for example, set to all 0s or all 1s. For example, if the data corresponding to the LCG 0 in FIG. 5 is the data that has a freshness requirement, and the data corresponding to the LCG 1 to the LCG 3 is the data that has no freshness requirement, the generation moment of the data corresponding to the LCG 0 is an actual generation moment of the data corresponding to the LCG 0, and generation moments of the data corresponding to the LCG 1 to the LCG 3 are default values.

For specific content of the data that has a freshness requirement, refer to the descriptions in S302. Details are not described herein again.

S402: The second apparatus sends third information to the first apparatus. Correspondingly, the first apparatus receives the third information from the second apparatus. The third information is used to determine a second moment at which the first data is sent, and the second moment is determined based on the first moment indicated by the second information.

For specific content that the third information is used to determine the second moment at which the first data is sent, refer to the content that the first information is used to determine the second moment in S301. Details are not described herein again.

Optionally, the second moment is determined by the second apparatus based on the first moment. In other words, the second apparatus determines a sending moment of the first data based on a generation moment of the first data. For example, when determining, based on the first moment, that a sampling interval of the first apparatus is greater than a ninth sampling interval threshold, the second apparatus may determine, for the first apparatus, to use a transmission interval greater than the ninth transmission interval threshold, and determine, based on the transmission interval, the second moment at which the first data is sent. For another example, when determining, based on the first moment, that a sampling interval of the first apparatus is less than a tenth sampling interval threshold, the second apparatus may determine, for the first apparatus, to use a transmission interval less than the tenth transmission interval threshold, and determine, based on the transmission interval, the second moment at which the first data is sent.

S402 is an optional step.

S403: The first apparatus sends, at the second moment, the first data generated at the first moment.

For specific content of S403, refer to S302. Details are not described herein again.

According to the method shown in FIG. 4, the first apparatus may send, to the second apparatus, information indicating a generation moment of data. In this way, the second apparatus may perform more proper processing on the data based on the generation moment of the data.

In addition, the second apparatus may determine a sending moment of the data based on the generation moment of the data, so that time elapsed for the data can be controlled, to improve real-time performance of the data.

Optionally, before S402, the method further includes steps C1 and C2.

C1: The first apparatus sends first assistance information to the second apparatus. Correspondingly, the second apparatus receives the first assistance information from the first apparatus. The first assistance information may be used to determine the second moment.

For specific content of step C1, refer to step B1. Repeated parts are not described again.

C2: The second apparatus determines the second moment based on the first assistance information.

When the first apparatus is in an energy saving state or energy of the first apparatus is less than a second energy threshold, the second apparatus may determine, for the first apparatus, a transmission interval greater than a fifth transmission interval threshold, and determine, based on the transmission interval, the second moment at which the first data is sent.

When energy of the first apparatus is greater than a first energy threshold, the second apparatus may determine, for the first apparatus, a transmission interval less than a sixth transmission interval threshold, and determine, based on the transmission interval, the second moment at which the first data is sent.

When sampling overheads of the first apparatus are greater than a first overhead threshold, the second apparatus may determine, for the first apparatus, a transmission interval greater than a seventh transmission interval threshold, and determine, based on the transmission interval, the second moment at which the first data is sent.

When sampling overheads of the first apparatus is less than a second overhead threshold, the second apparatus may determine, for the first apparatus, a transmission interval less than an eighth transmission interval threshold, and determine, based on the transmission interval, the second moment at which the first data is sent.

When a computing resource capacity of the first apparatus is greater than a first capacity threshold, the second apparatus may determine, for the first apparatus, a transmission interval less than a fifteenth transmission interval threshold, and determine, based on the transmission interval, the second moment at which the first data is sent.

When a computing resource capacity of the first apparatus is less than a second capacity threshold, the second apparatus may determine, for the first apparatus, a transmission interval greater than a sixteenth transmission interval threshold, and determine, based on the transmission interval, the second moment at which the first data is sent.

According to the method, the second apparatus may properly determine the sending moment of the data based on the first assistance information, to improve real-time performance of data transmission.

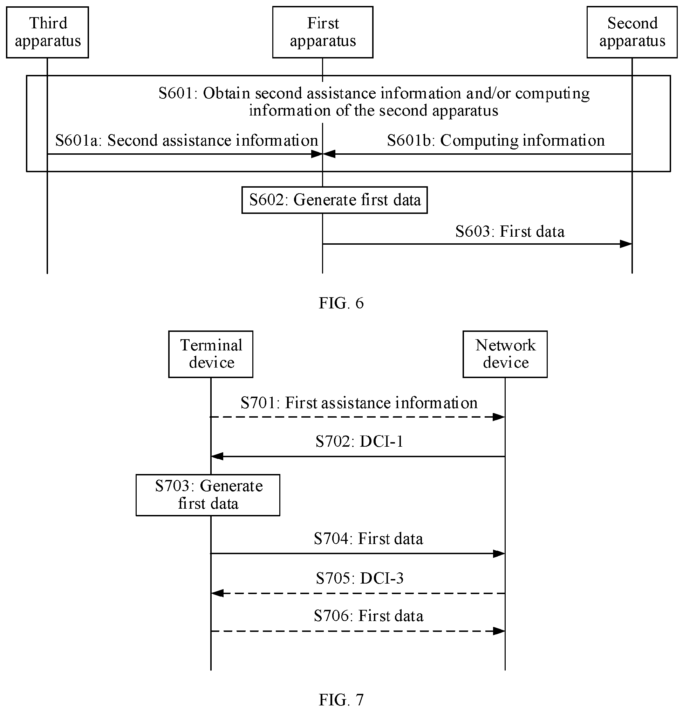

To resolve the foregoing technical problem, an embodiment of this application provides still another communication method. The method may be applied to the communication system shown in FIG. 1. The following specifically describes a procedure of the method with reference to a flowchart shown in FIG. 6.

S601: A first apparatus obtains second assistance information and/or computing information of a second apparatus.

S601 may include S601a and/or S601b.

S601a: A third apparatus sends the second assistance information to the first apparatus. Correspondingly, the first apparatus receives the second assistance information from the third apparatus.

Both the first apparatus and the third apparatus may send data to the second apparatus. For example, both the first apparatus and the third apparatus may send, to the second apparatus, data used to train an AI model in the second apparatus.

Optionally, both the first apparatus and the third apparatus are terminal devices. For example, the first apparatus is a first terminal device, and the third apparatus is a second terminal device. The second terminal device may send the second assistance information to the first terminal device through a sidelink.

Optionally, the second assistance information includes at least one of the following.

1. Energy status of the third apparatus, where for example, whether the third apparatus is in an energy saving state, whether energy of the third apparatus (for example, a remaining battery capacity of the third apparatus) is greater than a third energy threshold, or whether energy of the third apparatus is less than a fourth energy threshold.

2. Sampling overheads of the third apparatus, where for example, whether the sampling overheads of the third apparatus are greater than a third overhead threshold, or whether the sampling of the third apparatus is less than a fourth overhead threshold.

3. Moment at which the third apparatus generates data, for example, a moment at which the third apparatus generates the data used to train the AI model in the second apparatus.

4. Computing resource capacity of the third apparatus, where for example, whether the computing resource capacity of the third apparatus is greater than a third capacity threshold, or whether the computing resource capacity of the third apparatus is less than a fourth capacity threshold.

S601b: The second apparatus sends the computing information of the second apparatus to the first apparatus. Correspondingly, the first apparatus receives the computing information from the second apparatus.

The first apparatus may be a terminal device, and the second apparatus may be a network device or another terminal device.

The computing information of the second apparatus may indicate computing duration needed for data processing. For example, the computing duration needed for data processing may be computing duration needed for completing one time of iterative training of the AI model in the second apparatus. The computing information of the second apparatus includes the computing duration needed for data processing; or the computing information of the second apparatus includes information that has a correspondence with the computing duration needed for data processing.

The computing duration indicated by the computing information may be related to a scale of training data needed for completing one iteration of the AI model. For example, when the training data of the AI model is provided by a plurality of terminal devices, a scale of the training data is large, and long computing duration is needed.

S602: The first apparatus generates first data at a first moment based on the second assistance information and/or the computing information.

In some possible manners, the second assistance information includes the moment at which the third apparatus generates the data. The first apparatus may determine, based on the moment at which the third apparatus generates the data, a frequency or an interval at which the third apparatus generates the data. The first apparatus may generate data at a frequency or an interval different from that of the third apparatus, to generate the first data at the first moment. In this manner, the first apparatus and the third apparatus generate the data at different frequencies or intervals, so that it can be ensured that the second apparatus can obtain fresh data from a plurality of devices.

In some possible manners, the computing duration indicated by the computing information may be proportional to a sampling interval of the data. For example, when the computing duration is greater than a first computing duration threshold, the sampling interval of the data may be greater than a first interval threshold. If the first apparatus generates data 1 at a moment $T_4$, the first apparatus may determine a first moment at which an interval from the moment $T_4$ is greater than the first interval threshold. For another example, when the computing duration is less than a second computing duration threshold, the sampling interval of the data may be less than a second interval threshold. If the first apparatus generates data 1 at a moment $T_4$, the first apparatus may determine a first moment at which an interval from the moment $T_4$ is less than the second interval threshold. In this manner, it can be avoided that the generated data is congested in a data queue.

Optionally, the first apparatus may further determine, based on at least one of the following, the first moment at which the first data is generated: channel state information of the first apparatus and a transmission resource of the first apparatus. Descriptions are separately provided below.

The channel state information includes at least one of the following: a channel quality indicator (channel quality indicator, CQI), a rank indication (rank indication, RI), a channel occupancy ratio (channel occupancy ratio, CR), a channel busy ratio (channel busy ratio, CBR), and a received channel strength indicator (received signal strength indicator, RSSI).

For example, when one or more of the CQI, the RI, and the RSSI are lower than a first quality threshold, or the CR and/or the CBR are/is higher than a second quality threshold, it indicates that a current channel state is poor, and successful data transmission can be implemented only through a plurality of retransmissions. In this case, the first apparatus may determine that the sampling interval of the data is greater than a third interval threshold. If the first apparatus generates the data 1 at the moment $T_4$, the first apparatus may determine a first moment at which an interval from the moment $T_4$ is greater than the third interval threshold.

For another example, when one or more of the CQI, the RI, and the RSSI are higher than a third quality threshold, or the CR and/or the CBR are/is lower than a fourth quality threshold, the first apparatus may determine that the sampling interval of the data is less than a fourth interval threshold. If the first apparatus generates the data 1 at the moment $T_4$, the first apparatus may determine a first moment at which an interval from the moment $T_4$ is less than the fourth interval threshold.

According to the method, it can be avoided that the generated data is congested in the data queue, to improve real-time performance of data transmission.

In a possible implementation, the transmission resource is related to a configuration of a frame structure. For example, if an uplink resource of the first apparatus is less than a first resource threshold, the first apparatus may determine that the sampling interval of the data is greater than a fifth interval threshold. If the first apparatus generates the data 1 at the moment $T_4$, the first apparatus may determine a first moment at which an interval from the moment $T_4$ is greater than the fifth interval threshold. For another example, if an uplink resource of the first apparatus is greater than a second resource threshold, the first apparatus may determine that the sampling interval of the data is less than a sixth interval threshold. If the first apparatus generates the data 1 at the moment $T_4$, the first apparatus may determine a first moment at which an interval from the moment $T_4$ is greater than the sixth interval threshold. According to the method, a generation moment of the data can better match the transmission resource, so that the generation moment of the data can match a sending moment of the data, to reduce time elapsed for the data, and improve real-time performance of the data.

S603: The first apparatus sends the first data to the second apparatus at a second moment.

For a manner in which the first apparatus determines the second moment, refer to the manner of determining the second moment in Implementation 5. Repeated parts are not described again.

Optionally, the first apparatus may determine the second moment based on the second assistance information. The second assistance information may include one or more of the energy status, the sampling overheads, and the computing resource capacity that are of the third apparatus.

For example, when the third apparatus is in the energy saving state or the energy of the third apparatus is less than the fourth energy threshold, it indicates that the second apparatus may not need to frequently receive the data from the third apparatus. In this case, the first apparatus may determine a transmission interval less than an eleventh transmission interval threshold, and determine, based on the transmission interval, the second moment at which the first data is sent.

For another example, when the energy of the third apparatus is greater than the third energy threshold, it indicates that the second apparatus may need to frequently receive the data from the third apparatus. In this case, the first apparatus may determine a transmission interval greater than a twelfth transmission interval threshold, and determine, based on the transmission interval, the second moment at which the first data is sent.

For still another example, when the sampling overheads of the third apparatus are greater than the third overhead threshold, it indicates that the second apparatus may not need to frequently receive the data from the third apparatus. In this case, the first apparatus may determine a transmission interval less than a thirteenth transmission interval threshold, and determine, based on the transmission interval, the second moment at which the first data is sent.

For still another example, when the sampling overheads of the third apparatus are less than the fourth overhead threshold, it indicates that the second apparatus may need to frequently receive the data from the third apparatus. In this case, the first apparatus may determine a transmission interval greater than a fourteenth transmission interval threshold, and determine, based on the transmission interval, the second moment at which the first data is sent.

For still another example, when the computing resource capacity of the third apparatus is greater than the third capacity threshold, it indicates that the second apparatus may need to frequently receive the data from the third apparatus. In this case, the first apparatus may determine a transmission interval greater than a seventeenth transmission interval threshold, and determine, based on the transmission interval, the second moment at which the first data is sent.

For still another example, when the computing resource capacity of the third apparatus is less than the fourth capacity threshold, it indicates that the second apparatus may not need to frequently receive the data from the third apparatus. In this case, the first apparatus may determine a transmission interval less than an eighteenth transmission interval threshold, and determine, based on the transmission interval, the second moment at which the first data is sent.

According to the method shown in FIG. 6, the first apparatus may properly determine the generation moment and the sending moment of the data, to improve the real-time performance of data transmission.

An embodiment of this application provides a communication method. The method may be applied to the communication system shown in FIG. 1. The method is a possible instance of the method shown in FIG. 3. The following specifically describes a procedure of the method with reference to a flowchart shown in FIG. 7 by using an example in which a first apparatus is a terminal device and a second apparatus is a network device. In the method, the network device may determine a sending resource of data, and the terminal device may generate data at any time based on an indication of the network device.

S701: The terminal device sends first assistance information to the network device, and correspondingly, the network device receives the first assistance information.

S701 is an optional step. For specific content of S701, refer to step B1. Details are not described herein again.

S702: The network device sends DCI-1 to the terminal device, and correspondingly, the terminal device receives the DCI-1.

The DCI-1 is used to determine a moment $T_a$ at which first data is generated and a moment $T_b$ at which the first data is sent, and the moment $T_b$ may be a moment at which the first data is initially sent (namely, an initial transmission moment of the first data). For a specific manner in which the DCI-1 is used to determine the moment $T_a$, refer to the manner in which the first information is used to determine the first moment in S301. For a specific manner in which the DCI-1 is used to determine the moment $T_b$, refer to the manner in which the first information is used to determine the second moment in S301. Details are not described herein again.

Optionally, after determining the moment $T_a$ and the moment $T_b$ based on the first assistance information, the network device may send the DCI-1 to the terminal device. For a manner in which the network device determines the moment $T_a$ and the moment $T_b$ based on the first assistance information, refer to the manner in which the second apparatus determines the first moment and the second moment based on the first assistance information in step B2. Details are not described herein again.

S703: The terminal device generates the first data at the moment $T_a$.

In some possible manners, the terminal device collects, at the moment $T_a$, information used to generate the first data, and generates the first data based on the information. In this case, information collection and generation of the first data occur at the same time.

In some other possible manners, an interval between information collection and data generation is $\triangle T_a$. The terminal device collects, at a moment $T_a - \triangle T_a$, information used to generate the first data, and generates the first data based on the information at the moment $T_a$. $\triangle T_a$ may be predefined in a protocol or preconfigured, and $\triangle T_a$ may be a positive number.

S704: The terminal device sends the first data to the network device at the moment $T_b$.

For specific content of S704, refer to S302. Details are not described herein again.

S705: When the network device does not receive the first data or fails to decode the first data at the initial transmission moment, the network device sends DCI-3 to the terminal device, and correspondingly, the terminal device receives the DCI-3.

The DCI-3 is DCI used for retransmission, and may be used to determine a moment $T_c$ at which the first data is sent. The moment $T_c$ may be a moment at which the first data is retransmitted (namely, a retransmission moment of the first data). For a specific manner in which the DCI-R is used to determine the moment $T_c$, refer to the manner in which the first information is used to determine the second moment in S301. Details are not described herein again.

S706: The terminal device sends the first data to the network device at the moment $T_c$.

For specific content of S706, refer to S302. Details are not described herein again.

S705 and S706 are optional steps.

Optionally, after receiving the first data, the network device may train an AI model based on the first data. A specific manner in which the network device trains the AI model is not limited in this application.

According to the method shown in FIG. 7, the network device may determine a generation moment and a sending moment of data, so that time elapsed for the data can be controlled, to improve real-time performance of the data.

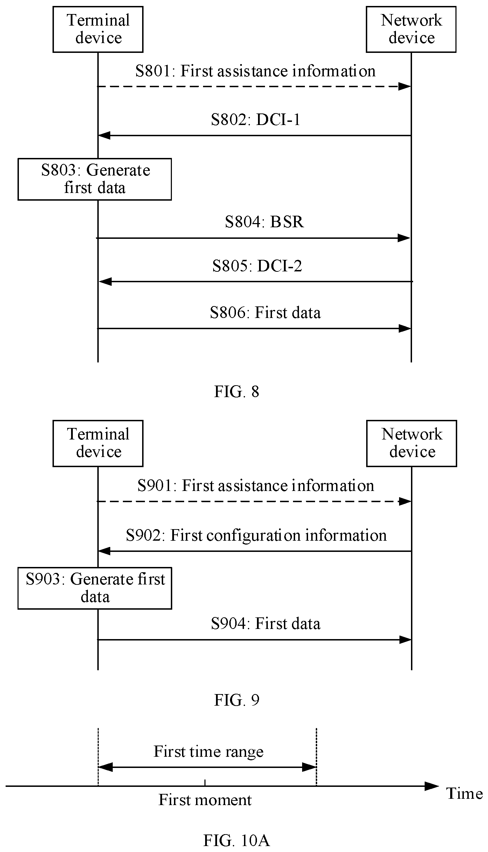

An embodiment of this application provides a communication method. The method may be applied to the communication system shown in FIG. 1. The method is another possible instance of the method shown in FIG. 3. The following specifically describes a procedure of the method with reference to a flowchart shown in FIG. 8 by using an example in which a first apparatus is a terminal device and a second apparatus is a network device. In the method, the network device may determine a sending resource of data, and the terminal device may generate data at any time based on an indication of the network device.

S801: The terminal device sends first assistance information to the network device, and correspondingly, the network device receives the first assistance information.

S801 is an optional step. For specific content of S801, refer to step S701. Details are not described herein again.

S802: The network device sends DCI-1 to the terminal device, and correspondingly, the terminal device receives the DCI-1.

The DCI-1 is used to determine a moment $T_a$ at which first data is generated. For a specific manner in which the DCI-1 is used to determine the moment $T_a$, refer to the manner in which the first information is used to determine the first moment in S301. Details are not described herein again.

Optionally, after determining the moment $T_a$ based on the first assistance information, the network device may send the DCI-1 to the terminal device. For a manner in which the network device determines the moment $T_a$ based on the first assistance information, refer to the manner in which the second apparatus determines the first moment based on the first assistance information in step B2. Details are not described herein again.

S803: The terminal device generates the first data at the moment $T_a$.

For specific content of S803, refer to S703. Details are not described herein again.

S804: The terminal device sends a BSR to the network device.

The BSR is used to request the network device to allocate a resource to the first data.

Optionally, the BSR includes a size of the first data.

S805: The network device sends DCI-2 to the terminal device.

The DCI-2 is used to determine a moment $T_b$ at which the first data is sent. For a specific manner in which the DCI-2 is used to determine the moment $T_b$, refer to the manner in which the first information is used to determine the second moment in S301. Details are not described herein again.

Optionally, there is an association relationship between the DCI-1 and the DCI-2. For the association relationship between the DCI-1 and the DCI-2, refer to the association relationship between the first message and the second message in S301. Details are not described herein again. In this way, when a plurality of pieces of data need to be transmitted between the network device and the terminal device, the terminal device may determine an association relationship between a generation moment and a sending moment of each piece of data based on the association relationship between the DCI-1 and the DCI-2.

Optionally, the DCI-2 includes information indicating the resource allocated to the first data.

S806: The terminal device sends the first data to the network device at the moment $T_b$.

For specific content of S806, refer to S302. Details are not described herein again.

Optionally, when the network device does not receive the first data or fails to decode the first data at an initial transmission moment, the network device may indicate, in the manner in S705 and S706, the terminal device to retransmit the first data.

Optionally, after receiving the first data, the network device may train an AI model based on the first data. A specific manner in which the network device trains the AI model is not limited in this application.

According to the method shown in FIG. 8, the network device may determine a generation moment and a sending moment of data, so that time elapsed for the data can be controlled, to improve real-time performance of the data.

An embodiment of this application provides a communication method. The method may be applied to the communication system shown in FIG. 1. The method is still another possible instance of the method shown in FIG. 3. The following specifically describes a procedure of the method with reference to a flowchart shown in FIG. 9 by using an example in which a first apparatus is a terminal device and a second apparatus is a network device.

S901: The terminal device sends first assistance information to the network device, and correspondingly, the network device receives the first assistance information.

S901 is an optional step. For specific content of S901, refer to step S701. Details are not described herein again.

S902: The network device sends first configuration information to the terminal device, and correspondingly, the terminal device receives the first configuration information.

The first configuration information includes information used to determine a first time range and information used to determine a second time range. The first time range is a time range for generating data, and the second time range is a time range for sending the data. For specific content of the information used to determine the first time range and the information used to determine the second time range, refer to S301. Details are not described herein again.

Optionally, the first configuration information may be information preconfigured by the network device for the terminal device. For example, when a generation moment of training data is determined by an environment or determined independently by the terminal device, the network device may preconfigure, for the terminal device, a time range for generating the data and a time range for sending the data.

S903: The terminal device generates first data at a moment $T_a$.

The moment $T_a$ belongs to the first time range. For example, as shown in FIG. 10A, the first time range is a range between two dashed lines in FIG. 10A, and the terminal device only needs to generate the data in the range. For example, the terminal device selects a moment from the range as the moment $T_a$.

S904: The terminal device sends the first data at a moment $T_b$.

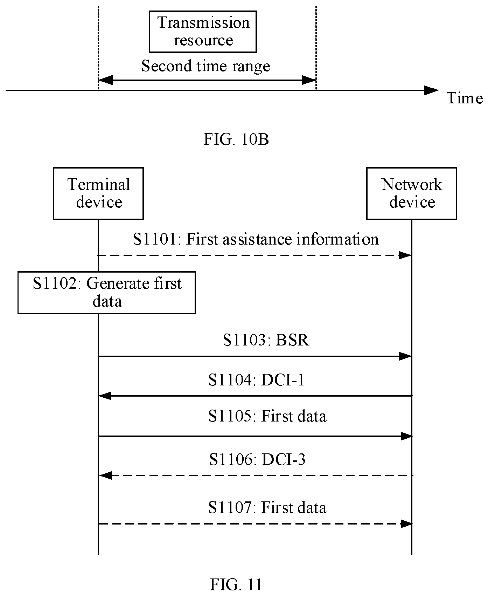

The moment $T_b$ belongs to the second time range. For example, as shown in FIG. 10B, the second time range is a range between two dashed lines in FIG. 10B. If the network device configures, for the terminal device, a resource used to transmit the first data in the second time range, the terminal device may send the first data on the resource, and a moment corresponding to the resource may be the moment $T_b$.

Optionally, if there is no resource used for data transmission in the second time range, the terminal device may request the network device to allocate a resource to the first data. For specific content, refer to steps A 1 and A2. Details are not described herein again.

Optionally, after receiving the first data, the network device may train an AI model based on the first data. A specific manner in which the network device trains the AI model is not limited in this application.

According to the method shown in FIG. 9, the network device may set, for the terminal device, the first time range for generating the data and the second time range for sending the data. In this way, the terminal device may generate the data in the first time range, and send the data in the second time range. The network device may control the generation moment and the sending moment of the data by controlling the first time range and the second time range, to control time elapsed for the data, and further improve real-time performance of the data.

An embodiment of this application provides a communication method. The method may be applied to the communication system shown in FIG. 1. The method is a possible instance of the method shown in FIG. 4. The following specifically describes a procedure of the method with reference to a flowchart shown in FIG. 11 by using an example in which a first apparatus is a terminal device and a second apparatus is a network device. In the method, the network device may independently determine a sending resource of data, and the terminal device may independently determine a generation moment of the data or determine a generation moment of the data based on an environment.

S1101: The terminal device sends first assistance information to the network device, and correspondingly, the network device receives the first assistance information.

S1101 is an optional step. For specific content of S1101, refer to step S701. Details are not described herein again.

S1102: The terminal device generates first data at a moment $T_a$.

The terminal device may independently determine that the generation moment of the data is the moment $T_a$, or determine, based on the environment, that the generation moment of the data is the moment $T_a$. For example, training data is temperature or humidity information in the environment. When a temperature or a humidity changes, the terminal device may automatically collect the training data by using a sensor. For another example, when the terminal device is in an energy saving state, the terminal device may collect the data at a specified interval, to achieve energy saving.

S1103: The terminal device sends a BSR to the network device, and correspondingly, the network device receives the BSR.

The BSR may include second information, and the second information indicates the moment Ta at which the first apparatus generates the first data.

For specific content of S1103, refer to the descriptions of sending the second information by the first apparatus to the second apparatus in S401. Details are not described herein again.

An execution sequence of S1101, S1102, and S1103 is not limited in this application.

S1104: The network device sends DCI-1 to the terminal device, and correspondingly, the terminal device receives the DCI-1.

The DCI-1 is used to determine a moment $T_b$ at which the first data is sent. For a specific manner in which the DCI-1 is used to determine the moment $T_b$, refer to the manner in which the first information is used to determine the second moment in S301. Details are not described herein again.

Optionally, the DCI-1 includes information indicating a first moment. In this way, the terminal device may associate a sending moment of the first data with a generation moment of the first data. In other words, there is an association relationship between the sending moment and the generation moment of the first data. When the terminal device needs to send a plurality of pieces of data to the terminal device, the terminal device may determine, based on an indication of the network device, a generation moment corresponding to each sending moment, so that each piece of data can be sent at a correct moment.

S1105: The terminal device sends the first data to the network device at the moment $T_b$.

For specific content of S1105, refer to S302. Details are not described herein again.

S1106: When the network device does not receive the first data or fails to decode the first data at an initial transmission moment, the network device sends DCI-3 to the terminal device.

The DCI-3 is used to determine a moment $T_c$ at which the first data is sent.

S1107: The terminal device sends the first data to the network device at the moment $T_c$.

For specific content of S1106 and S1107, refer to S705 and S706. Details are not described herein again.

S1106 and S1107 are optional steps.

Optionally, after receiving the first data, the network device may train an AI model based on the first data. A specific manner in which the network device trains the AI model is not limited in this application.

According to the method shown in FIG. 11, the network device may determine the sending moment of the data based on the generation moment of the data, so that time elapsed for the data can be controlled, to improve real-time performance of the data.

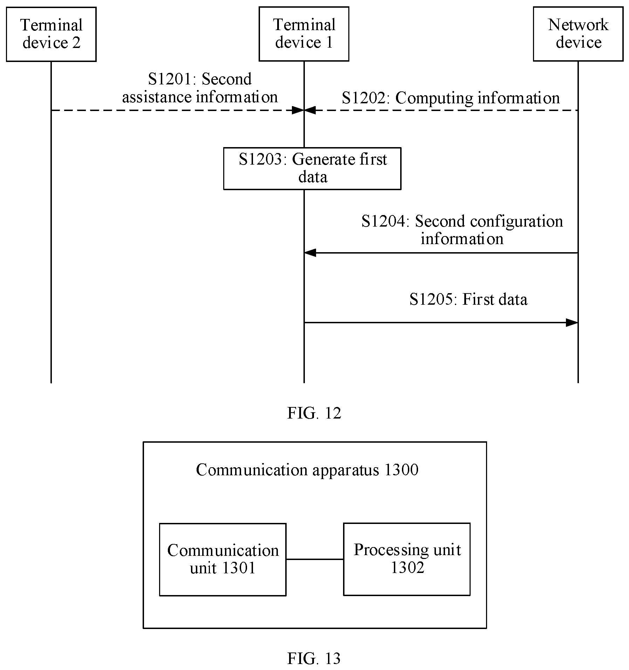

An embodiment of this application provides a communication method. The method may be applied to the communication system shown in FIG. 1. The method is a possible instance of the method shown in FIG. 6. The following specifically describes a procedure of the method with reference to a flowchart shown in FIG. 12 by using an example in which a first apparatus is a terminal device 1, a second apparatus is a network device, and a third apparatus is a terminal device 2.

S1201: The terminal device 2 sends second assistance information to the terminal device 1, and correspondingly, the terminal device 1 receives the second assistance information.

For specific content of S1201, refer to S601a. Details are not described herein again.

S1202: The network device sends computing information of the network device to the terminal device 1, and correspondingly, the terminal device 1 receives the computing information.

For specific content of S1202, refer to S601b. Details are not described herein again.

An execution sequence of S1201 and S1202 is not limited in this application.

S1203: The terminal device 1 generates first data at a moment $T_a$.

For a manner in which the terminal device 1 determines the moment $T_a$, refer to the manner in which the first apparatus determines the first moment in S602. Details are not described herein again.

S1204: The network device sends second configuration information to the terminal device 1, and correspondingly, the terminal device 1 receives the second configuration information.

The second configuration information includes information used to determine a second time range. The second time range is a time range for sending data. For specific content of the information used to determine the second time range, refer to S301. Details are not described herein again.

Optionally, the second configuration information may be information preconfigured by the network device for the terminal device 1. For example, when a generation moment of training data is determined by an environment or is determined independently by the terminal device 1, the network device may preconfigure, for the terminal device 1, a time range for sending the data.

An execution sequence of S1201 to S1203 and S1204 is not limited in this application.

S1205: The terminal device 1 sends the first data at a moment $T_b$.

For specific content of S1205, refer to S904. Details are not described herein again.

Optionally, after receiving the first data, the network device may train an AI model based on the first data. A specific manner in which the network device trains the AI model is not limited in this application.

According to the method shown in FIG. 12, the first apparatus may properly determine a generation moment and a sending moment of data, to improve real-time performance of data transmission.

Based on a same technical concept as the method embodiments in FIG. 3 to FIG. 12, an embodiment of this application provides a communication apparatus in FIG. 13, and the communication apparatus may be configured to perform functions of related steps in the foregoing method embodiments. The functions may be implemented by hardware, or may be implemented by software or by hardware executing corresponding software. The hardware or the software includes one or more modules corresponding to the functions. A structure of the communication apparatus is shown in FIG. 13, and includes a communication unit 1301 and a processing unit 1302. The communication apparatus 1300 may be used in the network device or the terminal device in the communication system shown in FIG. 1, and may implement the communication method provided in the foregoing embodiments and instances of this application. The following describes functions of the units in the communication apparatus 1300.

The communication unit 1301 is configured to receive and send data. The communication unit 1301 may be implemented by using a transceiver, for example, a mobile communication module. The mobile communication module may include at least one antenna, and may further include at least one filter, a switch, a power amplifier, a low noise amplifier (low noise amplifier, LNA), and the like. The communication unit 1301 may alternatively be implemented through an input/output interface.

The processing unit 1302 may be configured to support the communication apparatus 1300 in performing a processing action in the foregoing method embodiments. The processing unit 1302 may be implemented by using a processor. For example, the processor may be a central processing unit (central processing unit, CPU), a baseband processor, or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

In an implementation, the communication apparatus 1300 is used in the first apparatus shown in FIG. 3, or is used in the terminal device in the embodiment of this application shown in any one of FIG. 7 to FIG. 9. The following describes specific functions of the processing unit 1302 in this implementation.

The processing unit 1302 is configured to: receive first information from a second apparatus by using the communication unit 1301, where the first information is used to determine a first moment at which first data is generated and a second moment at which the first data is sent; and send the first data at the second moment by using the communication unit 1301.

Optionally, a time interval between the first moment and a first reference moment is a first time interval, a time interval between the second moment and the first reference moment is a second time interval, and the first reference moment is determined based on the first information.

Optionally, the first reference moment is a receiving moment of the first information, or the first information includes the first reference moment.

Optionally, the first time interval is included in the first information, or the first time interval is predefined; and/or the second time interval is included in the first information, or the second time interval is predefined.

Optionally, the first information includes the first moment and/or the second moment.

Optionally, the processing unit 1302 is specifically configured to receive fourth information from the second apparatus by using the communication unit 1301, where the fourth information indicates a size of the first data.

Optionally, the first information includes fifth information used to determine the first moment and sixth information used to determine the second moment.

Optionally, the fifth information is included in a first message, the sixth information is included in a second message, and there is an association relationship between the first message and the second message.

Optionally, the first information includes information used to determine a first time range and/or information used to determine a second time range, the first time range is a time range for generating data, and the second time range is a time range for sending the data. The first moment belongs to the first time range, and the second moment belongs to the second time range.

Optionally, the processing unit 1302 is specifically configured to send first assistance information to the second apparatus by using the communication unit 1301, where the first assistance information is used to determine the first moment and/or the second moment.

Optionally, the first assistance information includes at least one of the following: an energy status of the first apparatus and sampling overheads of the first apparatus.

Optionally, the processing unit 1302 is specifically configured to: preferentially multiplex, based on the first information, a logic channel corresponding to the first data.

In another implementation, the communication apparatus 1300 is used in the first apparatus shown in FIG. 4, or is used in the terminal device in the embodiment of this application shown in FIG. 11. The following describes specific functions of the processing unit 1302 in this implementation.

The processing unit 1302 is configured to: send second information to a second apparatus by using the communication unit 1301, where the second information indicates a first moment at which the first apparatus generates first data; and send the first data at a second moment by using the communication unit 1301.

Optionally, the processing unit 1302 is specifically configured to receive third information from the second apparatus by using the communication unit 1301, where the third information is used to determine the second moment, and the second moment is determined based on the first moment indicated by the second information.

Optionally, the processing unit 1302 is specifically configured to send first assistance information to the second apparatus by using the communication unit 1301, where the first assistance information is used to determine the first moment and/or the second moment.

Optionally, the first assistance information includes at least one of the following: an energy status of the first apparatus and sampling overheads of the first apparatus.

Optionally, the processing unit 1302 is specifically configured to: preferentially multiplex, based on the first information, a logic channel corresponding to the first data.

In still another implementation, the communication apparatus 1300 is used in the second apparatus shown in FIG. 3, or is used in the network device in the embodiment of this application shown in any one of FIG. 7 to FIG. 9. The following describes specific functions of the processing unit 1302 in this implementation.

The processing unit 1302 is configured to: send first information to a first apparatus by using the communication unit 1301, where the first information is used to determine a first moment at which first data is generated and a second moment at which the first data is sent; and receive the first data from the first apparatus by using the communication unit 1301.

Optionally, a time interval between the first moment and a first reference moment is a first time interval, a time interval between the second moment and the first reference moment is a second time interval, and the first reference moment is determined based on the first information.

Optionally, the first reference moment is a sending moment of the first information, or the first information includes the first reference moment.

Optionally, the first time interval is included in the first information, or the first time interval is predefined; and/or the second time interval is included in the first information, or the second time interval is predefined.

Optionally, the first information includes the first moment and/or the second moment.

Optionally, the processing unit 1302 is specifically configured to send fourth information to the first apparatus by using the communication unit 1301, where the fourth information indicates a size of the first data.

Optionally, the first information includes fifth information used to determine the first moment and sixth information used to determine the second moment.

Optionally, the fifth information is included in a first message, the sixth information is included in a second message, and there is an association relationship between the first message and the second message.

Optionally, the first information includes information used to determine a first time range and/or information used to determine a second time range, the first time range is a time range for generating data, and the second time range is a time range for sending the data. The first moment belongs to the first time range, and the second moment belongs to the second time range.

Optionally, the processing unit 1302 is specifically configured to receive first assistance information from the first apparatus by using the communication unit 1301, where the first assistance information is used to determine the first moment and/or the second moment.

Optionally, the first assistance information includes at least one of the following: an energy status of the first apparatus and sampling overheads of the first apparatus.

In still another implementation, the communication apparatus 1300 is used in the second apparatus shown in FIG. 4, or is used in the network device in the embodiment of this application shown in FIG. 11. The following describes specific functions of the processing unit 1302 in this implementation.

The processing unit 1302 is configured to: receive second information from a first apparatus by using the communication unit 1301, where the second information indicates a first moment at which the first apparatus generates first data; and receive the first data from the first apparatus by using the communication unit 1301.

Optionally, the processing unit 1302 is specifically configured to send third information to the first apparatus by using the communication unit 1301, where the third information is used to determine a second moment at which the first data is sent, and the second moment is determined based on the first moment indicated by the second information.

Optionally, the processing unit 1302 is specifically configured to receive first assistance information from the first apparatus by using the communication unit 1301, where the first assistance information is used to determine the first moment and/or the second moment.

Optionally, the first assistance information includes at least one of the following: an energy status of the first apparatus and sampling overheads of the first apparatus.

It should be noted that, in the foregoing embodiments of this application, division into modules is an example, and is merely logical function division. During actual implementation, there may be another division manner. In addition, functional units in embodiments of this application may be integrated into one processing unit, may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to a conventional technology, or all or some of the technical solutions may be implemented in a form of a software product. The computer software product is stored in a storage medium and includes several instructions for instructing a computer device (which may be a personal computer, a server, a network device, or the like) or a processor (processor) to perform all or some of the steps of the methods in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

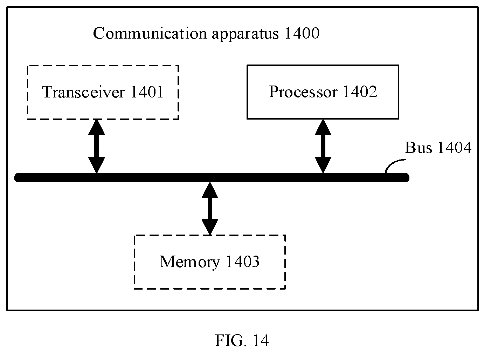

Based on a same technical concept, an embodiment of this application provides a communication apparatus shown in FIG. 14, and the communication apparatus may be configured to perform related steps in the foregoing method embodiments. The communication apparatus may be used in the network device or the terminal device in the communication system shown in FIG. 1, may implement the communication method provided in the foregoing embodiments and instances of this application, and has functions of the communication apparatus shown in FIG. 13. Refer to FIG. 14. The communication apparatus 1400 includes a processor 1402. Optionally, the communication apparatus 1400 further includes a transceiver 1401 and a memory 1403. The transceiver 1401, the processor 1402, and the memory 1403 are connected to each other.

Optionally, the transceiver 1401, the processor 1402, and the memory 1403 are connected to each other through a bus 1404. The bus 1404 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is used in FIG. 14 for representation, but it does not indicate that there is only one bus or only one type of bus.

The transceiver 1401 is configured to receive and send data, to implement communication interaction with another device. For example, the transceiver 1401 may be implemented through a physical interface, a communication module, a communication interface, and an input/output interface.

The processor 1402 may be configured to support the communication apparatus 1400 in performing a processing action in the foregoing method embodiments. When the communication apparatus 1400 is configured to implement the foregoing method embodiments, the processor 1402 may be further configured to implement functions of the processing unit 1302. The processor 1402 may be a CPU, or may be another general-purpose processor, a DSP, an ASIC, an FPGA or another programmable logic device, a transistor logic device, a hardware component, or any combination thereof. The general-purpose processor may be a microprocessor or any conventional processor.

In an implementation, the communication apparatus 1300 is used in the first apparatus shown in FIG. 3, or is used in the terminal device in the embodiment of this application shown in any one of FIG. 7 to FIG. 9. The processor 1402 is specifically configured to: receive first information from a second apparatus by using the transceiver 1401, where the first information is used to determine a first moment at which first data is generated and a second moment at which the first data is sent; and send the first data at the second moment by using the transceiver 1401.

In another implementation, the communication apparatus 1300 is used in the first apparatus shown in FIG. 4, or is used in the terminal device in the embodiment of this application shown in FIG. 11. The processor 1402 is specifically configured to: send second information to a second apparatus by using the transceiver 1401, where the second information indicates a first moment at which the first apparatus generates first data; and send the first data at a second moment by using the transceiver 1401.

In still another implementation, the communication apparatus 1300 is used in the second apparatus shown in FIG. 3, or is used in the network device in the embodiment of this application shown in any one of FIG. 7 to FIG. 9. The processor 1402 is specifically configured to: send first information to a first apparatus by using the transceiver 1401, where the first information is used to determine a first moment at which first data is generated and a second moment at which the first data is sent; and receive the first data from the first apparatus by using the transceiver 1401.

In still another implementation, the communication apparatus 1300 is used in the second apparatus shown in FIG. 4, or is used in the network device in the embodiment of this application shown in FIG. 11. The processor 1402 is specifically configured to: receive second information from a first apparatus by using the transceiver 1401, where the second information indicates a first moment at which the first apparatus generates first data; and receive the first data from the first apparatus by using the transceiver 1401.

For specific functions of the processor 1402, refer to the descriptions of the communication method provided in the foregoing embodiments and instances of this application and the specific function descriptions of the communication apparatus 1300 in the embodiment of this application shown in FIG. 13. Details are not described herein again.

The memory 1403 is configured to store program instructions, data, and the like. Specifically, the program instructions may include program code, and the program code includes computer operation instructions. The memory 1403 may include a RAM, or may further include a non-volatile memory (non-volatile memory), for example, at least one magnetic disk memory. The processor 1402 executes the program instructions stored in the memory 1403, and implements the foregoing functions by using the data stored in the memory 1403, to implement the communication method provided in the foregoing embodiments of this application.

It may be understood that the memory 1403 in FIG. 14 in this application may be a volatile memory or a non-volatile memory, or may include both a volatile memory and a non-volatile memory. The non-volatile memory may be a ROM, a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a RAM, and serves as an external cache. By way of example but not limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memory in the system and the method described in this specification is intended to include, but not limited to, these memories and any memory of another proper type.

Based on the foregoing embodiments, an embodiment of this application further provides a computer program. When the computer program is run on a computer, the computer is enabled to perform the method provided in the foregoing embodiments.

Based on the foregoing embodiments, an embodiment of this application further provides a computer-readable storage medium. The computer-readable storage medium stores a computer program. When the computer program is executed by a computer, the computer is enabled to perform the method provided in the foregoing embodiments.

The storage medium may be any usable medium that can be accessed by the computer. The following provides an example but does not impose a limitation: The computer-readable medium may include a RAM, a ROM, an EEPROM, a CD-ROM or another optical disc storage, a magnetic disk storage medium or another magnetic storage device, or any other medium that can be used to carry or store expected program code in a form of instructions or a data structure and can be accessed by the computer.

Based on the foregoing embodiments, an embodiment of this application further provides a chip. The chip is configured to read a computer program stored in a memory, to implement the method provided in the foregoing embodiments.

Based on the foregoing embodiments, an embodiment of this application provides a chip system. The chip system includes a processor, configured to support a computer apparatus in implementing functions of the devices in the foregoing embodiments. In a possible design, the chip system further includes a memory, and the memory is configured to store a program and data that are necessary for the computer apparatus. The chip system may include a chip, or may include a chip and another discrete component.

In conclusion, embodiments of this application provide a communication method and apparatus. In the method, a second apparatus sends first information to a first apparatus, and the first information is used to determine a first moment at which first data is generated and a second moment at which the first data is sent. Then, the first apparatus may send, at the second moment, the first data generated at the first moment. According to the method, the second apparatus indicates a generation moment and a sending moment of data of the first apparatus, so that time elapsed for the data can be controlled, to improve real-time performance of data transmission.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to flowcharts and/or block diagrams of the method, device (system), and computer program product according to this application. It should be understood that computer program instructions may be used to implement each procedure and/or each block in the flowcharts and/or the block diagrams and a combination of procedures and/or blocks in the flowcharts and/or the block diagrams. These computer program instructions may be provided for a general-purpose computer, a dedicated computer, an embedded processor, or a processor of another programmable data processing device to generate a machine, so that the instructions executed by a computer or the processor of the another programmable data processing device generate an apparatus for implementing a specific function in one or more procedures in the flowcharts and/or one or more blocks in the block diagrams.

These computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more procedures in the flowcharts and/or one or more blocks in the block diagrams.

These computer program instructions may alternatively be loaded onto a computer or another programmable data processing device, so that a series of operation steps are performed on the computer or the another programmable device to generate computer-implemented processing. Therefore, the instructions executed on the computer or the another programmable device provide steps for implementing a specific function in one or more procedures in the flowcharts and/or one or more blocks in the block diagrams.

It is clear that a person skilled in the art can make various modifications and variations to this application without departing from the scope of this application. In this way, this application is intended to cover these modifications and variations of this application provided that they fall within the scope of the claims of this application and equivalent technologies thereof.

**Claims**

1. A communication method, comprising:

   receiving, by a first apparatus, first information from a second apparatus, wherein the first information is used to determine a first moment at which first data is generated and a second moment at which the first data is sent; and
   sending the first data at the second moment.

2. The method according to claim 1, wherein a time interval between the first moment and a first reference moment is a first time interval, a time interval between the second moment and the first reference moment is a second time interval, and the first reference moment is determined based on the first information.

3. The method according to claim 2, wherein the first reference moment is a receiving moment of the first information, or the first information comprises the first reference moment.

4. The method according to claim 2 or 3, wherein the first time interval is comprised in the first information, or the first time interval is predefined; and/or
   the second time interval is comprised in the first information, or the second time interval is predefined.

5. The method according to claim 1, wherein the first information comprises the first moment and/or the second moment.

6. The method according to any one of claims 1 to 5, further comprising:
   receiving fourth information from the second apparatus, wherein the fourth information indicates a size of the first data.

7. The method according to claim 1, wherein the first information comprises fifth information used to determine the first moment and sixth information used to determine the second moment, the fifth information is comprised in a first message, the sixth information is comprised in a second message, and there is an association relationship between the first message and the second message.

8. The method according to claim 1, wherein the first information comprises information used to determine a first time range and/or information used to determine a second time range, the first time range is a time range for generating data, and the second time range is a time range for sending the data; and
   the first moment belongs to the first time range, and the second moment belongs to the second time range.

9. A communication method, comprising:

   sending, by a first apparatus, second information to a second apparatus, wherein the second information indicates a first moment at which the first apparatus generates first data; and
   sending the first data at a second moment.

10. The method according to claim 9, further comprising:
    receiving third information from the second apparatus, wherein the third information is used to determine the second moment, and the second moment is determined based on the first moment indicated by the second information.

11. The method according to any one of claims 1 to 10, wherein the method further comprises:
    sending first assistance information to the second apparatus, wherein the first assistance information is used to determine the first moment and/or the second moment.

12. The method according to claim 11, wherein the first assistance information comprises at least one of the following: an energy status of the first apparatus, sampling overheads of the first apparatus, and a computing resource capacity of the first apparatus.

13. The method according to any one of claims 1 to 12, wherein the sending the first data comprises:
preferentially multiplexing, based on the first information, a logic channel corresponding to the first data.

14. A communication method, comprising:

sending, by a second apparatus, first information to a first apparatus, wherein the first information is used to determine a first moment at which first data is generated and a second moment at which the first data is sent; and
receiving the first data from the first apparatus.

15. The method according to claim 14, wherein a time interval between the first moment and a first reference moment is a first time interval, a time interval between the second moment and the first reference moment is a second time interval, and the first reference moment is determined based on the first information.

16. The method according to claim 15, wherein the first reference moment is a sending moment of the first information, or the first information comprises the first reference moment.

17. The method according to claim 15 or 16, wherein the first time interval is comprised in the first information, or the first time interval is predefined; and/or
the second time interval is comprised in the first information, or the second time interval is predefined.

18. The method according to claim 14, wherein the first information comprises the first moment and/or the second moment.

19. The method according to any one of claims 14 to 18, further comprising:
sending fourth information to the first apparatus, wherein the fourth information indicates a size of the first data.

20. The method according to claim 14, wherein the first information comprises fifth information used to determine the first moment and sixth information used to determine the second moment, the fifth information is comprised in a first message, the sixth information is comprised in a second message, and there is an association relationship between the first message and the second message.

21. The method according to claim 14, wherein the first information comprises information used to determine a first time range and/or information used to determine a second time range, the first time range is a time range for generating data, and the second time range is a time range for sending the data; and
the first moment belongs to the first time range, and the second moment belongs to the second time range.

22. A communication method, comprising:

receiving, by a second apparatus, second information from a first apparatus, wherein the second information indicates a first moment at which the first apparatus generates first data; and
receiving the first data from the first apparatus.

23. The method according to claim 22, further comprising:
sending third information to the first apparatus, wherein the third information is used to determine a second moment at which the first data is sent, and the second moment is determined based on the first moment indicated by the second information.

24. The method according to any one of claims 14 to 23, wherein the method further comprises:
receiving first assistance information from the first apparatus, wherein the first assistance information is used to determine the first moment and/or the second moment.

25. The method according to claim 24, wherein the first assistance information comprises at least one of the following: an energy status of the first apparatus, sampling overheads of the first apparatus, and a computing resource capacity of the first apparatus.

26. A communication apparatus, comprising:

   a communication unit, configured to receive and send data; and
   a processing unit, configured to perform the method according to any one of claims 1 to 13 by using the communication unit.

27. A communication apparatus, comprising:

   a communication unit, configured to receive and send data; and
   a processing unit, configured to perform the method according to any one of claims 14 to 25 by using the communication unit.

28. A communication apparatus, comprising a processor, wherein the processor is coupled to a memory that stores instructions, and when the instructions are executed by the processor, the communication apparatus is enabled to perform the method according to any one of claims 1 to 13.

29. A communication apparatus, comprising a processor, wherein the processor is coupled to a memory that stores instructions, and when the instructions are executed by the processor, the communication apparatus is enabled to perform the method according to any one of claims 14 to 25.

30. A computer-readable storage medium, wherein the computer-readable storage medium stores a computer program, and when the computer program is run on a computer, the computer is enabled to perform the method according to any one of claims 1 to 25.

31. A computer program product comprising instructions, wherein when the computer program product runs on a computer, the method according to any one of claims 1 to 25 is performed.

32. A chip, wherein the chip is coupled to a memory, and the chip reads a computer program stored in the memory, to perform the method according to any one of claims 1 to 25.

33. A communication system, comprising the communication apparatus according to claim 26 and the communication apparatus according to claim 27.

FIG. 1

FIG. 2A

$W_1=0$

$T_0$

$T_1=S_1$

$t_0$   $t'_0$   $t_1$   $t'_1$   Time

FIG. 2B

$T_1$

$T_0$

$S_1$

$W_1$

$t_0$   $t_1$   $t'_0$   $t'_1$   Time

FIG. 2C

| Processing time | Waiting time | Transmission time | Computing time |
|---|---|---|---|

Generation
moment of data

Time

FIG. 2D

S201: Multiplex, in descending
order of priorities of LCs, data
corresponding to the plurality of
LCs on an uplink resource

S202: Allocate a remaining
resource to the plurality of LCs
based on the priorities of the
plurality of LCs

FIG. 2E

S2011:
Is Bj greater than 0?

No

Yes

S2012: Multiplex a SDU into a MAC PDU, and subtract a quantity of tokens corresponding to Tsdu from Bj

No

S2013: Is a PBR met?

Yes

S2014: Process a next LC in a plurality of LCs

FIG. 2F

First apparatus

Second apparatus

S301: First information

S302: First data

FIG. 3

```
┌──────────┐                                    ┌──────────┐
│  First   │                                    │  Second  │
│ apparatus│                                    │ apparatus│
└──────────┘                                    └──────────┘
     │           S401: Second information            │
     │──────────────────────────────────────────────▶│
     │                                                │
     │           S402: Third information              │
     │◀ ─ ─ ─ ─ ─ ─ ─ ─ ─ ─ ─ ─ ─ ─ ─ ─ ─ ─ ─ ─ ─ ─ │
     │                                                │
     │              S403: First data                  │
     │──────────────────────────────────────────────▶│
     │                                                │
```

FIG. 4

| LCG 3 | LCG 2 | LCG 1 | LCG 0 |
|-------|-------|-------|-------|
| Data type 0 | Buffer size 0 | Generation moment 0 of data ||
| Data type 1 | Buffer size 1 | Generation moment 1 of data ||
| Data type 2 | Buffer size 2 | Generation moment 2 of data ||
| Data type 3 | Buffer size 3 | Generation moment 3 of data ||

FIG. 5

Third apparatus | First apparatus | Second apparatus

S601: Obtain second assistance information and/or computing information of the second apparatus

S601a: Second assistance information | S601b: Computing information

S602: Generate first data

S603: First data

FIG. 6

Terminal device | Network device

S701: First assistance information

S702: DCI-1

S703: Generate first data

S704: First data

S705: DCI-3

S706: First data

FIG. 7

```
        ┌──────────┐                                    ┌──────────┐
        │ Terminal │                                    │ Network  │
        │  device  │                                    │  device  │
        └──────────┘                                    └──────────┘
              │        S801: First assistance information      │
              │ - - - - - - - - - - - - - - - - - - - - - - →  │
              │                                                │
              │             S802: DCI-1                        │
              │ ←──────────────────────────────────────────── │
   ┌──────────────────┐                                        │
   │ S803: Generate   │                                        │
   │   first data     │                                        │
   └──────────────────┘                                        │
              │             S804: BSR                          │
              │ ────────────────────────────────────────────→ │
              │                                                │
              │             S805: DCI-2                        │
              │ ←──────────────────────────────────────────── │
              │                                                │
              │             S806: First data                  │
              │ ────────────────────────────────────────────→ │
              │                                                │
```

FIG. 8

```
        ┌──────────┐                                    ┌──────────┐
        │ Terminal │                                    │ Network  │
        │  device  │                                    │  device  │
        └──────────┘                                    └──────────┘
              │        S901: First assistance information      │
              │ - - - - - - - - - - - - - - - - - - - - - - →  │
              │                                                │
              │      S902: First configuration information     │
              │ ←──────────────────────────────────────────── │
   ┌──────────────────┐                                        │
   │ S903: Generate   │                                        │
   │    first data    │                                        │
   └──────────────────┘      S904: First data                 │
              │ ────────────────────────────────────────────→ │
              │                                                │
```

FIG. 9

```
        ┆                           ┆
        │←─────── First time range ───────→│
        ┆                           ┆
  ──────┆───────────────────────────┆──────────→ Time
        First moment
```

FIG. 10A

EP 4 622 247 A1

FIG. 10B

FIG. 11

38

| Terminal device 2 | Terminal device 1 | Network device |
|---|---|---|

S1201: Second
assistance information   S1202: Computing information

S1203: Generate first
data

S1204: Second configuration
information

S1205: First data

FIG. 12

Communication apparatus 1300

| Communication unit 1301 | Processing unit 1302 |
|---|---|

FIG. 13

Communication apparatus 1400

Transceiver 1401

Processor 1402

Bus 1404

Memory 1403

FIG. 14

**INTERNATIONAL SEARCH REPORT**

| International application No. |
|---|
| **PCT/CN2022/133821** |

| A. | CLASSIFICATION OF SUBJECT MATTER |
|---|---|
| | H04N7/015(2006.01)i |

According to International Patent Classification (IPC) or to both national classification and IPC

| B. | FIELDS SEARCHED |
|---|---|

Minimum documentation searched (classification system followed by classification symbols)

IPC: H04N H04W

Documentation searched other than minimum documentation to the extent that such documents are included in the fields searched

Electronic data base consulted during the international search (name of data base and, where practicable, search terms used)

CNTXT; CNKI; ENTXTC; ENTXT; DWPI; 3GPP; IEEE: 数据, 生成, 采集, 时间, 时刻, 发送, 传输, 参考, 信令, data, generat+, acquisit+, time, moment, transmission, transmit+, reference, signaling

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 111108789 A (SONY CORP.) 05 May 2020 (2020-05-05) claim 20, and description, paragraphs 177-196 | 1, 9, 14, 22, 26-33 |
| A | CN 111108789 A (SONY CORP.) 05 May 2020 (2020-05-05) ditto | 2-8, 10-13, 15-21, 23-25 |
| A | CN 113128117 A (HENAN NATURE SCI-TECH CO., LTD.) 16 July 2021 (2021-07-16) entire document | 1-33 |
| A | CN 110992088 A (BEIJING JIAOTONG UNIVERSITY) 10 April 2020 (2020-04-10) entire document | 1-33 |
| A | CN 109902832 A (HUAWEI TECHNOLOGIES CO., LTD.) 18 June 2019 (2019-06-18) entire document | 1-33 |
| A | JP 2022131042 A (EHIME UNIVERSITY) 07 September 2022 (2022-09-07) entire document | 1-33 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **17 August 2023** | **22 August 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2022/133821**

| Patent document cited in search report | | | Publication date (day/month/year) | Patent family member(s) | | | Publication date (day/month/year) |
|---|---|---|---|---|---|---|---|
| CN | 111108789 | A | 05 May 2020 | RU | 2020111322 | A | 20 September 2021 |
| | | | | RU | 2020111322 | A3 | 17 December 2021 |
| | | | | EP | 3691360 | A1 | 05 August 2020 |
| | | | | EP | 3691360 | A4 | 04 November 2020 |
| | | | | WO | 2019064986 | A1 | 04 April 2019 |
| | | | | US | 2020296795 | A1 | 17 September 2020 |
| | | | | US | 11659624 | B2 | 23 May 2023 |
| | | | | JPWO | 2019064986 | A1 | 05 November 2020 |
| | | | | JP | 7226322 | B2 | 21 February 2023 |
| CN | 113128117 | A | 16 July 2021 | None | | | |
| CN | 110992088 | A | 10 April 2020 | CN | 110992088 | B | 03 June 2022 |
| CN | 109902832 | A | 18 June 2019 | None | | | |
| JP | 2022131042 | A | 07 September 2022 | None | | | |

Form PCT/ISA/210 (patent family annex) (July 2022)